# EUROPÄISCHE PATENTSCHRIFT

(11) **EP 3 154 900 B1**
(45) Veröffentlichungstag und Bekanntmachung des Hinweises auf die Patenterteilung: **30.01.2019**
(21) Anmeldenummer: 15729135.2
(22) Anmeldetag: 10.06.2015
(51) Int. Cl.: C01B 3/06

(54) **KOMPOSITMATERIAL ZUR HYDROLYTISCHEN ERZEUGUNG VON WASSERSTOFF, VORRICHTUNG ZUR HYDROLYTISCHEN ERZEUGUNG VON WASSERSTOFF, VERFAHREN ZUR ERZEUGUNG VON WASSERSTOFF, VORRICHTUNG ZUR ERZEUGUNG VON ELEKTRISCHER ENERGIE SOWIE VERWENDUNGSMÖGLICHKEITEN**
COMPOSITE MATERIAL FOR HYDROLYTICALLY GENERATING HYDROGEN, DEVICE FOR HYDROLYTICALLY GENERATING HYDROGEN, METHOD FOR GENERATING HYDROGEN, DEVICE FOR GENERATING ELECTRIC ENERGY, AND POSSIBLE APPLICATIONS
MATIÈRE COMPOSITE POUR GÉNÉRER DE L'HYDROGÈNE DE MANIÈRE HYDROLYTIQUE, DISPOSITIF DE GÉNÉRATION HYDROLYTIQUE D'HYDROGÈNE, PROCÉDÉ DE GÉNÉRATION D'HYDROGÈNE, DISPOSITIF DE GÉNÉRATION D'ÉNERGIE ÉLECTRIQUE AINSI QUE POSSIBILITÉS D'UTILISATION

(30) Priorität: 13.06.2014 DE 102014211422
(43) Veröffentlichungstag der Anmeldung: 19.04.2017
(73) Patentinhaber: Fraunhofer Gesellschaft zur Förderung der angewandten Forschung E.V., 80686 München (DE)
(72) Erfinder: TEGEL, Marcus, 01277 Dresden (DE); RÖNTZSCH, Lars, 01309 Dresden (DE); KIEBACK, Bernd, 01728 Possendorf (DE)
(74) Vertreter: Pfenning, Meinig & Partner mbB
(86) Internationale Anmeldenummer: PCT/EP2015/062896
(87) Internationale Veröffentlichungsnummer: WO 2015/189247

(56) Entgegenhaltungen:
- WO-A1-2014/198948
- WO-A2-2014/013246
- JP-A- 2014 028 714
- US-A1- 2010 150 824

## Beschreibung

Kompakte und leichte Einwegspeicher zur Erzeugung elektrischer Energie mit extrem hohen Energiedichten (> 1 kWh/kg und > 1 kWh/Liter) sind für viele Anwendungsfelder von immensem Interesse. Eine Möglichkeit, solche Energiespeicher zu realisieren, besteht in der Verwendung von Metallhydriden in Wasserstoffgeneratoren, bei denen durch eine hydrolytische Abspaltung eines Protons von Wasser in Verbindung mit dem Metallhydrid Wasserstoff generiert wird. Die im Wasserstoff gespeicherte chemische Energie kann dann in einem zweiten Schritt in einer Brennstoffzelle in elektrische Energie umgewandelt werden. Bei der Hydrolysereaktion stammt nur die Hälfte des erzeugten Wasserstoffs aus dem Metallhydrid - das zur Hydrolyse verwendete Wasser liefert die andere Hälfte.

Da Wasser unterschiedlicher Zusammensetzung auf der Erde nahezu ubiquitär vorkommt, kann die Wasserstofferzeugung durch Hydrolyse auch mit lokal vorhandenem, ionenhaltigem Wasser erfolgen. Auf diese Weise muss nur noch die Vorrichtung zur hydrolytischen Erzeugung des Wasserstoffs mit Speichermaterial, nicht aber das zur Hydrolyse verwendete Wasser zum Ort der Energieerzeugung transportiert werden, was zu einer drastischen Erhöhung der Nutzenergiedichte solcher Speichersysteme führt.

Bestehende Speichermaterialien zur hydrolytischen Erzeugung von Wasserstoff haben jedoch gravierende Nachteile: Sie sind entweder toxisch (z.B. NaBH₄ - wobei nicht nur NaBH₄ selbst, sondern auch die verwendeten Katalysatoren oft toxisch sind), zu schwer (z.B. CaH₂), zu teuer (H-Mg₃*RE*; *RE*=Lanthanide La-Lu), zu reaktiv und damit nicht gefahrlos und einfach handhabbar (beispielsweise alle Alkalimetallhydride) - oder im Falle von MgH₂, was prinzipiell alle sonstigen Anforderungen an ein solches Speichermaterial erfüllt - zu unreaktiv. Das Hauptproblem bei der Verwendung von MgH₂, aber auch von anderen hydrierten magnesiumhaltigen Legierungen in Vorrichtungen zur hydrolytischen Wasserstofferzeugung liegt in der Bildung einer passivierenden oberflächlichen Schicht von Mg(OH)₂ bei Kontakt des Hydrids mit Wasser, wodurch die Hydrolysereaktion bereits nach sehr kurzer Reaktionsdauer nahezu vollständig zum Erliegen kommt.

Stand der Technik ist die Verwendung nanokristalliner Metallhydride (WO 01/68517) zur hydrolytischen Wasserstofferzeugung, wo durch einen hohen Energieeintrag die Reaktivität des Hydrids soweit gesteigert wurde, dass im Vergleich zu polykristallinem Metallhydrid eine erhöhte Reaktionskinetik zu verzeichnen ist. Für MgH₂ ist in WO 01/68517 beispielsweise ein Reaktionsumsatz von 80 % nach 20 Stunden Hydrolysedauer angegeben. Nachteilig dabei ist jedoch die sehr lange Mahldauer (20 Stunden) und der damit für die Mahlung erforderliche Energieeintrag zur Herstellung des Speichermaterials. Außerdem ist die Reaktionskinetik mit einem Umsatz von 80 % nach 20 Stunden immer noch für die Realisierung einer durch Portionierung des Feststoffs steuerbaren Hydrolyse unzureichend. In eigenen Untersuchungen wurde außerdem festgestellt, dass eine Alterung der metastabilen, durch Mahlungen erzeugten nanokristallinen Hydride bei Lagerung über mehrere Wochen (selbst bei Raumtemperatur unter Argon mit H₂O < 1 ppm, O₂ < 1 ppm) auftritt, was zu einer signifikanten Reduktion der nutzbaren Speicherdichte des Hydrids führt. US2010/150824 offenbart ein Wasserstofferzeuger wobei ein Hydrid (z.B. MgH₂, CaH₂) mit Wasser reagiert wird. Weiterhin ist bekannt, dass bestimmte wässrige Lösungen mancher Halogenide eine schnellere Hydrolyse von MgH₂ begünstigen (z.B. CN102491265). Ein gravierender Nachteil dabei ist jedoch, dass eine solche Lösung erst vor Ort erzeugt werden müsste, und da diese Salze zudem in entsprechend hoher Konzentration (z.B. 1 Mol/Liter) eingesetzt werden und zusammen mit dem Energiespeichermaterial transportiert werden müssten, sinkt die Nutzspeicherdichte entsprechender Gesamtsysteme beträchtlich.
Genauso ungünstig sieht die Situation bei der Verwendung von Brønsted-Säuren oder Puffern als Mg(OH)₂-Inhibitoren aus (z.B. DOI 10.1016/j.ijhydene.2012.06.012). Um die Bildung von passivierendem Mg(OH)₂ zu verhindern, müssten zu 1 g MgH₂ rechnerisch beispielsweise 4,9 g Zitronensäure zugesetzt werden, was einer Reduktion der gravimetrischen Speicherdichte des Gesamtsystems von 83 % entspricht. Dieses generelle Missverhältnis zwischen Speichermaterial und Magnesiumhydroxid-Inhibitor ist in ähnlicher Größenordnung auch bei allen anderen Brønsted-Säuren und auch bei Puffern gegeben und konnte in vielen Experimenten bestätigt werden.
Als Möglichkeit zur Katalyse der Hydrolysereaktion gemäß Stand der Technik besteht der Zusatz teurer edelmetallhaltiger Katalysatoren (z.B. Pt-LiCoO₂, DOI 10.1023/B:JMSC.0000017794.92899.bd), wobei neben den reinen Materialkosten auch noch große Mengen an Katalysator (bis zu 50 Gew.-%) benötigt werden; bekannt ist ferner der Einsatz bestimmter nanokristalliner Magnesiumhydrid-Metalloxid-Komposite (z.B. CN102060266), wobei die für WO 01 68517 genannten Problematiken nanokristalliner Materialien im Wesentlichen auch bestehen.
Eine Lösung der Inhibitionsproblematik der Hydrolyse durch bei in realem Wasser vorkommende Ionen wie beispielsweise Phosphat oder Carbonat für magnesiumhaltige Hydride ist genauso wenig bekannt wie eine Lösung der unzureichenden Handhabbarkeit der für die Hydrolyse verwendeten Materialien unter Anwendungsbedingungen (Lagerfähigkeit, Dosierbarkeit, Anlaufverzögerung).
Ausgehend hiervon war es Aufgabe der vorliegenden Erfindung, ein Kompositmaterial für die hydrolytische Erzeugung von Wasserstoff anzugeben, das eine möglichst einfache Zusammensetzung aufweist, eine möglichst große Wasserstoffspeicherkapazität besitzt und einfach zu handhaben ist. Zudem war es die Aufgabe der vorliegenden Erfindung, eine entsprechende Vorrichtung zur hydrolytischen Erzeugung von Wasserstoff, eine Vorrichtung zur Erzeugung elektrischer Energie, ein Verfahren zur Wasserstofferzeugung sowie Verwendungsmöglichkeiten des hydrolytisch erzeugten Wasserstoffs anzugeben.
Diese Aufgabe wird bezüglich eines Kompositmaterials zur hydrolytischen Erzeugung von Wasserstoff mit den Merkmalen des Anspruchs 1 bezüglich einer Vorrichtung zur hydrolytischen Erzeugung von Wasserstoff mit den Merkmalen des Patentanspruchs 11 bezüglich eines Verfahrens zur Erzeugung von Wasserstoff mit den Merkmalen des Patentanspruchs 17 einer Vorrichtung zur Erzeugung elektrischer Energie mit den Merkmalen des Patentanspruchs 19 sowie Verwendungsmöglichkeiten mit den Merkmalen des Patentanspruchs 20 gelöst. Die jeweilig abhängigen Patentansprüche stellen dabei vorteilhafte Weiterbildungen dar.

Im Folgenden werden die Begriffe Carbonsäureester und Ester synonym für aprotische, unpolare oder wenig polare organische Substanzen mit mindestens einer Carbonsäureestergruppe verwendet, der Begriff Wasser schließt wasserhaltige Gemische mit ein. Der Begriff Substanz umfasst nicht nur Reinstoffe, sondern auch komplexe Substanzen variabler Zusammensetzung, denen eine eindeutige CAS-Registriernummer zugewiesen werden kann.

Der Hauptvorteil der Erfindung besteht in der Zugabe eines Esters in Kombination mit einem geeigneten Metallsalz zu dem Metallhydrid, so dass sich einerseits eine passende Konsistenz, aber auch eine wesentliche Erhöhung der Reaktionsgeschwindigkeit des Kompositmaterials ergibt. Damit kann dann technisch sehr vorteilhaft dosiert werden und es kommt bei Wasserzugabe zu einer extrem hohen Hydrolysegeschwindigkeit. Beispielsweise kann ein quantitativer Umsatz von Kompositmaterial und Wasser innerhalb von weniger als 3 Minuten erfolgen (siehe Ausführungsbeispiel 3), was insbesondere im Vergleich zu einer Reaktionsdauer gemäß Stand der Technik von 20 h in WO 01/68517 eine sehr große Verbesserung darstellt. Weiterhin kann eine sehr gute Steuerbarkeit des Hydrolyseprozesses realisiert werden, da sowohl das Kompositmaterial als auch das Wasser einfach dosiert werden können.

Das Kompositmaterial gemäß der vorliegenden Erfindung zeichnet sich insbesondere dadurch aus, dass dieses bei Zugabe von Wasser unter Abgabe von Wasserstoff und Wärme eine durch die zuzugebende Menge an Wasser regelbare und bei Wasserüberschuss sich selbst erhaltende Hydrolysereaktion eingeht, die nach Reaktionsende einen Reaktionsumsatz von mehr als 90 % aufweist.

Ein weiterer Vorteil des erfindungsgemäßen Kompositmaterials ist, dass es lagerungsbeständig ist, insbesondere, dass sich bei Lagerung bei 20 °C und unter Ausschluss von Feuchtigkeit weniger als 5 Gew.-% des darin befindlichen mindestens einen erdalkalimetallhaltigen Metallhydrids pro Monat zersetzen.

Insbesondere ist es vorteilhaft beim erfindungsgemäßen Kompositmaterial, dass sich alle darin enthaltenen Feststoffe unter Einwirkung von Wasser bei 100 °C zersetzen, auflösen oder einer Phasenumwandlung unterliegen.

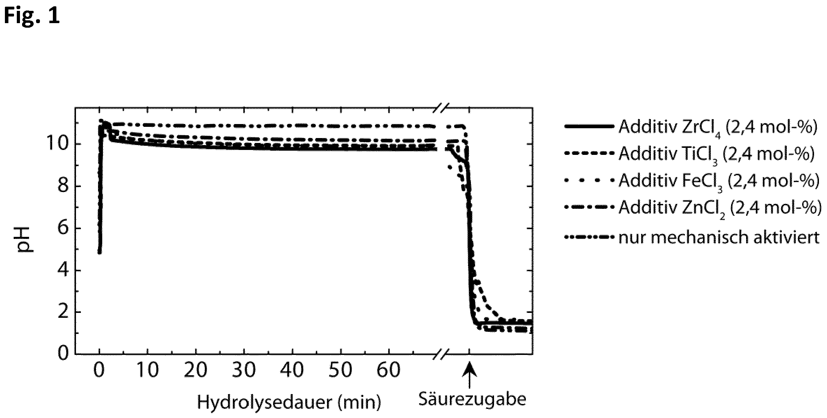

Die hauptsächliche Wirkung des Zusetzens einer geringen Menge eines wasserlöslichen und/oder unter Wassereinwirkung zersetzbaren Salzes mit mindestens zweiwertigen Metallkationen zu einem hydrierten erdalkalimetallhaltigen Material wird in der feinverteilten Bildung eines hydroxidischen Niederschlags in der Reaktionsmischung vermutet. Durch diesen dynamischen Entzug von Hydroxidionen kommt es zu einer signifikanten Verringerung der Protonenkonzentration (Figur 1) in der gebildeten Suspension, wodurch die Bildungstendenz von oberflächlichem Erdalkalimetallhydroxid kleiner wird, was wiederum in einer deutlich erhöhten Reaktionskinetik der Hydrolyse resultiert. Ebenso wie in der wässrigen Phase kann sich der hydroxidische Niederschlag auch im Carbonsäureester verteilen, was die Reaktionskinetik weiter steigert.

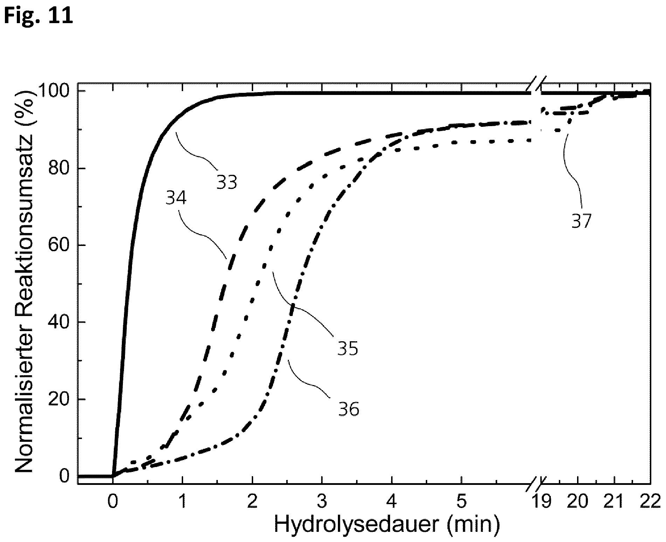

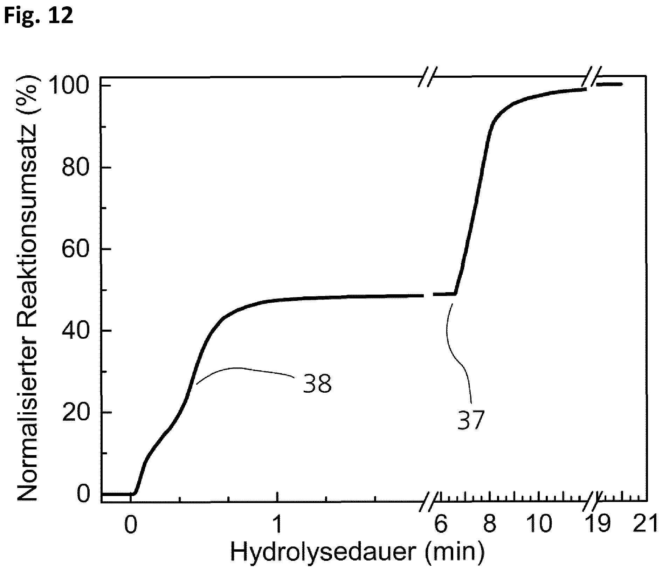

Weitere Vorteile des Carbonsäureesters im Kompositmaterials sind:
- Eine einfachere Steuerbarkeit der Reaktion ist möglich, weil durch den Ester im Kompositmaterial eine vorteilhafte Zugabe des Wassers zum Kompositmaterial ermöglicht wird (ohne Ester kommt es bei einer unterstöchiometrischen Zugabe von Wasser zum Feststoff zur Bildung passivierender Hydroxidschichten auf der Hydridoberfäche) - siehe Ausführungsbeispiel 2.
- Es wird deutlich weniger Wasser für die Hydrolysereaktion benötigt (ca. die 1,5-fach-stöchiometrische Menge ist ausreichend).
- Eine bessere Nutzung der Reaktionswärme kann erfolgen (da weniger Wasser benötigt wird, welches bei der Reaktion aufgeheizt werden muss).
- Es ergibt sich ein Einsparpotential an benötigtem Metallsalzadditiv.
- Durch die Dispergierwirkung des Esters gegenüber sich bildenden Hydroxiden bei substöchiometrischen Mengen Wasser wird nach Reaktionsunterbrechung ein deutlich verbessertes Wiederanlaufverhalten erzielt (siehe ebenfalls Ausführungsbeispiel 2).
- Es kann ein Carbonsäureester mit Entschäumerwirkung eingesetzt werden und/oder die Notwendigkeit der Zugabe eines zusätzlichen Entschäumungsmittels entfällt.
- In vielen Fällen ist eine Agitation trotz eines zweiphasigen Gemischs nicht notwendig - die Reaktionsmischung wird also auch rein konvektiv homogenisiert.
- Eine vollständige thermische Entkopplung kann realisiert werden (z.B. aufgrund eines besseren Wärmeübergangs flüssig→fest vs. gasförmig→fest).
- Der Wärmetausch kann optional über den zumindest unter Reaktionsbedingungen (> 25 °C) flüssigen Ester erfolgen.
- Mischungsverhältnisse von Metallhydrid, Metallsalzadditiv und Ester lassen sich beliebig vom festen über den pastösen bis zum flüssigen (suspendierten) Zustand einstellen - dadurch lassen sich einfache Dosiermöglichkeiten realisieren, beispielsweise durch eine Pumpe, Förderschnecke, Elastomerblase, eine Tube oder einen Schlauchbeutel.
- Mit Estern, die erst unter dem Einfluss von (Reaktions-)wärme schmelzen, können Kompositmaterialien erzeugt werden, die ausschließlich heißreaktiv sind und somit verbesserte Lagereigenschaften besitzen (beispielsweise aufgrund einer verringerten Empfindlichkeit gegenüber Luftfeuchtigkeit) - siehe Ausführungsbeispiel 4.
- Carbonsäureester haben viele Vorteile gegenüber anderen potenziell geeigneten, bekannten Materialien für Metallhydridsuspensionen wie Alkanen oder Ether: Viele Ester sind ungiftig, preisgünstig, nichtflüchtig und biologisch abbaubar.
- Im Gegensatz zu stärker polaren Suspensionsmitteln im Kompositmaterial wie beispielsweise dem nicht erfindungsgemäßen organischen Carbonat (Kohlensäureester) Propylencarbonat lassen sich deutlich höhere Reaktionsgeschwindigkeiten und/oder ein viel höherer Reaktionsgesamtumsatz erzielen (siehe Figuren 11 und 12)

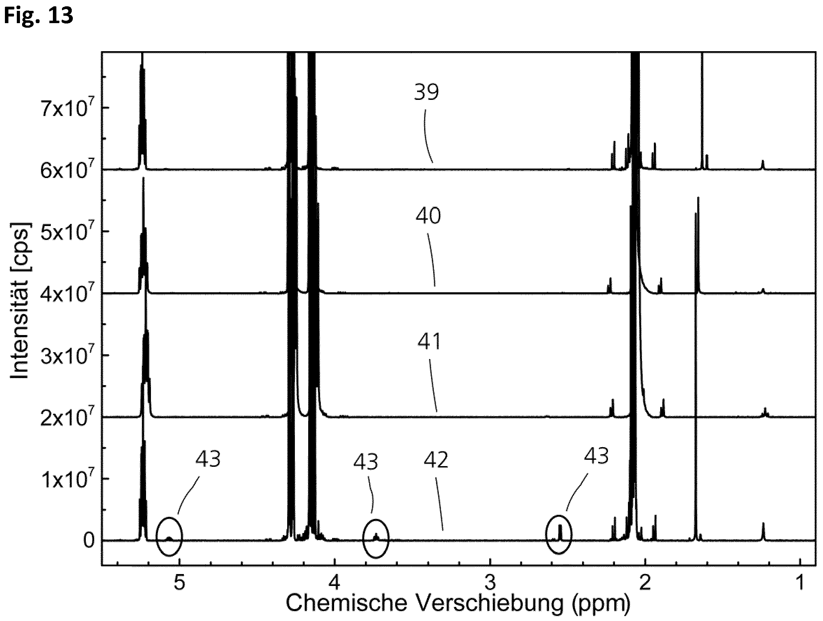

Die Nichtreaktivität der meisten Carbonsäureester gegenüber erdalkalimetallhaltigen Metallhydriden ist insofern bemerkenswert, da insbesondere bei salzartigen Hydriden eigentlich ein nucleophiler Angriff des Hydrids am Carbonylkohlenstoffatom der Estergruppe(n) zu erwarten wäre. In eigenen Untersuchungen und vielen Versuchen konnte jedoch bestätigt werden, dass sich Kompositmaterialien bestehend aus erdalkalimetallhaltigen Metallhydriden, Metallsalzadditiven und Carbonsäureestern auch über eine Lagerdauer von nahezu einem Jahr chemisch nicht verändern und somit offenbar keiner nennenswerten Alterung unterliegen (beispielhaft ist die kernresonanzspektroskopische Untersuchung eines Esters vor und nach monatelanger Lagerung unter anderem unter Luftausschluss in Figur 13 abgebildet). Offensichtlich ist die Reaktivität, insbesondere von Magnesiumhydrid, aufgrund dessen stärker ausgeprägten kovalenten Bindungscharakters, im Vergleich zu beispielsweise Alkalimetallhydriden, gegenüber Estern, äußerst eingeschränkt und somit beispielsweise mit der Reaktivität einiger Komplexhydride vergleichbar.

Das erfindungsgemäße Kompositmaterial wird zur Erzeugung von Wasserstoff mit Wasser oder einem Wasser enthaltenden Gemisch kontaktiert. Hierbei bildet sich selbsttätig aus dem erdalkalimetallhaltigen Metallhydrid durch Hydrolyse Wasserstoff.

Gemäß einer bevorzugten Ausführungsform weist die mindestens eine aprotische organische Substanz mit mindestens einer Carbonsäureestergruppe bei Normaldruck einen Schmelzpunkt von weniger als 100 °C, bevorzugt von 25 bis 95 °C oder von weniger als -20 °C und/oder einen Siedepunkt von mehr als 100 °C, bevorzugt von mehr als 150 °C und/oder einem Dampfdruck von weniger als 1 hPa bei 20 °C, bevorzugt von weniger als 10 Pa bei 20 °C, weiter bevorzugt von weniger als 0,4 Pa bei 20 °C, besonders bevorzugt von weniger als 10⁻² Pa bei 20 °C auf.

Insbesondere ist es ferner vorteilhaft, wenn die mindestens eine aprotische organische Substanz mit mindestens einer Carbonsäureestergruppe keine aciden Protonen enthält, insbesondere keine unveresterten Säuregruppen, keine Hydroxygruppen und keine primären und sekundären Aminogruppen, da diese ansonsten mit dem erdalkalimetallhaltigen Metallhydrid reagieren würden.

Die mindestens eine aprotische organische Substanz mit mindestens einer Carbonsäureestergruppe kann optional ausschließlich aus Carbonsäureestergruppen und aliphatischen, verzweigten und/oder aliphatischen, unverzweigten Kohlenwasserstoffresten aufgebaut sein.

Ferner ist es vorteilhaft, wenn die mindestens eine aprotische organische Substanz mit mindestens einer Carbonsäureestergruppe genau eine, zwei, drei oder vier Carbonsäureestergruppen enthält.

Vorzugsweise beträgt die Gesamtmenge der mindestens einen aprotischen, unpolaren oder wenig polaren organischen Substanz mit mindestens einer Carbonsäureestergruppe in der Zubereitung des Kompositmaterials zwischen 1 und 80 Gew.-%, weiter bevorzugt zwischen 5 und 70 Gew.-%, weiterhin bevorzugt zwischen 10 und 60 Gew.-%, insbesondere zwischen 21 und 50 Gew.-%, besonders bevorzugt zwischen 30 und 49 Gew.-%.

Die mindestens eine aprotische organische Substanz mit mindestens einer Carbonsäureestergruppe ist nicht oder nur teilweise mit Wasser mischbar und weist somit eine Löslichkeitsobergrenze von weniger als 25 Gew.-% (entsprechend 250 g Ester / kg Wasser) bei 25 °C auf, bevorzugt eine Löslichkeitsobergrenze von weniger als 9 Gew.-% (entsprechend 90 g Ester / kg Wasser), insbesondere von weniger als 4 Gew.-% (entsprechend 40 g Ester / kg Wasser) und ferner bevorzugt weniger als 1,5 Gew.-% (entsprechend 15 g Ester / kg Wasser), weiterhin bevorzugt weniger als 0,001 Gew.-% (entsprechend 0,01 g Ester / kg Wasser). In eigenen Untersuchungen wurde erkannt, dass eine vollständige oder hohe Mischbarkeit von Ester bzw. Suspensionsmittel und Wasser eine Verringerung der Reaktionsgeschwindigkeit und/oder des Gesamtreaktionsumsatzes mit sich bringt. Die Mischbarkeit von Ester bzw. Suspensionsmittel und Wasser ist gekennzeichnet durch die Löslichkeit von Ester/Suspensionsmittel in Wasser bei 25 °C und eine größere Löslichkeit korreliert mit einer stärkeren Polarität. Allgemein zählen Carbonsäureester zu den aprotisch-unpolaren organischen Substanzen und weisen typischerweise Löslichkeiten von weniger als 9 Gew.-% in Wasser auf.

Das Kompositmaterial gemäß der vorliegenden Erfindung ist vorteilhafterweise frei von Substanzen, die Hydroxidionen und/oder Wasser enthalten oder freisetzen. Auf diese Weise können unerwünschte Nebenreaktionen im Kompositmaterial herabgesetzt werden, ebenso ist es dadurch möglich, die Reaktivität des Kompositmaterials weiter zu steigern.

Ebenso ist es bei der vorliegenden Erfindung nicht notwendig, dass sogenannte "carrier liquids" beinhaltet sein müssen, bevorzugt ist die Kompositzusammensetzung gemäß der vorliegenden Erfindung daher frei von derartigen carrier liquids (organische Substanzen ohne Carbonsäureestergruppen), wie z. B. Alkanen.

Vorzugsweise ist das Kompositmaterial frei von Glycolestern. Ebenso ist es bevorzugt, wenn keine organischen Carbonate (Kohlensäureester), wie z. B. Propylencarbonat im erfindungsgemäßen Kompositmaterial enthalten sind.

Insbesondere ist der Carbonsäureester der vorliegenden Erfindung ausgewählt aus bei Raumtemperatur (Normalbedingungen) flüssigen Carbonsäureestern, wie beispielsweise Octandisäure-1,8-dimethylester; Pentandisäure-1,5-dipropylester; Heptandisäure-1,7-diethylester; Oxacyclotridecan-2-on; Hexandisäure-1,6-dipropylester; Decandisäure-1,10-dimethylester; Butandisäure-1,4-dibutylester; Octandisäure-1,8-diethylester; Nonandisäure-1,9-diethylester; Pentandisäure-1,5-dibuylester; Propandisäure-1,5-dipentylester; Dodecansäuremethylester; Undecansäureethylester; Octansäurepentylester; Hexansäureheptylester; Hexandisäure-1,6-dibutylester; Decandisäure-1,10-diethylester; Hexandisäure-1,6-bis(2-methylpropyl)-ester; Butandisäure-1,4-dipentylester; Dodecansäureethylester; Essigsäuredodecylester; Heptansäureheptylester; Octansäurehexylester; Hexansäureoctylester; 2,2,4,4-Pentantetracarboxylsäure-1,2,4,5-tetraethylester; 1,4-Dioxacycloheptadecan-5,17-dion; Butansäure-1,2,3-propantriylester; Tributtersäureglycerinester; Octansäureheptylester; Heptansäureoctylester; Hexansäurenonylester; Tetradecansäureethylester; Octansäureoctylester; Tetradecansäure-1-methylester; Hexansäureundecylester; 1-Hexadecanol-1-acetat; Decansäureoctylester; Hexadecansäure-1-methylester; Decansäuredecylester; Hexandisäure-1,6-dioctylester; Hexandisäure-1-decyl-6-octylester; Hexandisäure-1,6-dinonylester; Nonandisäure-1,9-bis(2-ethylhexyl)-ester; 1,2,3-Propantriol-1,2,3-triacetat [Triacetin]; Octansäure-1,1',1''-(1,2,3-propantriyl)-ester [Glycerintricaprylat]; Decandisäure-1,10-bis(2-ethylhexyl)-ester [Dioctylsebacat]; Hexandisäure-1,6-bis(2-ethylhexyl)-ester; Decandisäure-1,10-dibutylester; Decansäure-1,1',1"-(1,2,3-propantriyl)-ester [Glycerintricaprinat]; Tridecansäuremethylester; Tetradecansäurebutylester; Hexansäure-1,1',1"-(1,2,3-propantriyl)-ester [Glycerintricapronat]; Hexadecansäure-(2-ethylhexyl)-ester; Hexandisäure-1,6-dihexylester; Nonandisäure-1,9-dihexylester; Hexandisäure-1,6-diheptylester; Nonansäurebutylester; Dodecansäurehexylester; Nonansäurepentylester; Nonansäureheptylester; Nonansäure-1,9-bis(2-ethylbutyl)-ester; Hexandisäure-1,6-bis(2-ethylbutyl)-ester; Hexansäuretetradecylester; Hexansäuretridecylester; Cyclohexandicarbonsäurediester, bevorzugt mit linearen oder verzweigten aliphatischen Alkylalkoholatresten an den Estergruppen -OR, wobei R 1 bis 20 Kohlenstoffatome umfasst, insbesondere 1,2-Cyclohexandicarbonsäurediisononylester (DINCH). Triacetin ist hierbei besonders bevorzugt, da es gleichzeitig entschäumende Wirkung besitzt.

Alternativ und ebenso bevorzugt können bei Raumtemperatur (Normalbedingungen) feste Carbonsäureester eingesetzt werden, wie insbesondere Tetradecansäuremethylester; Hexadecansäuremethylester; Dodecansäureethylester; Octadecansäuremethylester; Eicosansäuremethylester; Decandisäure-1,10-dimethylester; Docosansäuremethylester; Hexadecansäure-1-methylethylester; Tridecandisäure-1,13-dimethylester; Octadecansäurebutylester; Eicosansäureethylester; Docosansäureethylester; Hexadecandisäure-1,16-dimethylester; 1,12-Dodecandisäure-1,12-diacetat; Hexadecansäurehexadecylester; Hexandisäure-1,6-dioctylester; Octadecandisäure-1,18-diethylester; Butansäure-1,2,3-propantriylester; 1,1,2,2-Ethantetracarboxylsäure-1,1,2,2-tetraethylester; Oxacyclotridecan-2-on; Hexadecansäure-1,1',1"-(1,2,3-propantriyl)-ester [Tripalmitin]; Tetradecansäure-1,1',1"-(1,2,3-propantriyl)-ester [Trimyristin]; 2,2-Bis(octadecanoyloxymethyl)-1,3-propandiyldioctadecanoat [Pentaerythrittetrastearat]; Octadecansäureoctadecylester [Stearylstearat]; Docosansäure-1,1',1"-(1,2,3-propantriyl)-ester [Tribehenin]; Nonadecansäureethylester; Docosansäuredocosylester [Behenylbehenat]; Decansäure-1,1',1"-(1,2,3-propantriyl)-ester [Tricaprin]; 2,2-Bis[(acetyloxy)methyl]-propan-1,3-diol-1,3-diacetat; Octadecansäure-1,1',1"-(1,2,3-propantriyl)-ester [Glycerintristearat]; 2-Octadecanoyloxyethyloctadecanoat [Ethylenglycoldistearat]; Dodecansäure-1,1',1"-(1,2,3-propantriyl)-ester [Trilaurin].

Als Vertreter der Cyclohexandicarbonsäurediester eignet sich insbesondere 1,2-Cyclohexandicarbonsäurediisononylester (DINCH), das in der Regel als Substanz mit variablen Alkylalkoholatresten vorliegt. Bei den Alkylalkoholatresten der Estergruppen kann es sich z.B. um Regio- und Stereoisomere der Zusammensetzungen -OC₈H₁₇, -OC₉H₁₉ oder -OC₁₀H₂₁ handeln. Der jeweilige Anteil der -OC₉H₁₉-Isomere liegt insbesondere bei etwa 10 % *n-*Nonyl-, 35-40 % Methyloctyl-, 40-45 % Dimethylheptyl- und 5-10 % Methylethylhexylalkoholat. Da es sich bei DINCH um eine technische Substanz handelt, können als Verunreinigungen zudem Spuren von 1,2-Benzoldicarbonsäuredinonylester (linear oder verzweigt), Dinonylether (linear oder verzweigt), Nonanol (linear oder verzweigt), Cyclohexancarbonsäurenonylester (linear oder verzweigt) und 2-Methylcyclohexancarbonsäurenonylester (linear oder verzweigt) enthalten sein. In der Cyclohexandicarbonsäure-Teilstruktur können die beiden Carbonsäuregruppen außer in der 1,2-Stellung auch in der 1,3- oder in der 1,4-Stellung am Cyclohexanring verknüpft sein. Bevorzugt sind Cyclohexandicarbonsäurediester, welche auch unterhalb von -20 °C fließfähig sind und somit einen Schmelzpunkt (bzw. Pourpoint) von weniger als -20 °C aufweisen und gleichzeitig einen Dampfdruck von weniger als 10⁻² Pa bei 20 °C aufweisen.

Die Substanz mit mindestens einer Carbonsäureestergruppe ist ferner bevorzugt ausgewählt aus der Gruppe von Weichmachern, insbesondere aus der Gruppe von Phthalaten, insbesondere Diisodecylphthalat und/oder Diisononylphthalat und deren Derivaten.

Selbstverständlich sind Mischungen und Kombinationen aus zwei oder mehr der zuvor genannten Carbonsäureester ebenso bevorzugt.

Die Substanz mit mindestens einer Carbonsäureestergruppe kann ferner auch eine variable Zusammensetzung aufweisen, insbesondere Alkoholatreste variabler Zusammensetzung und/oder unterschiedlicher Isomerie an einer oder mehreren Carbonsäureestergruppen besitzen.

Aufgrund der speziellen Carbonsäureester, die in der erfindungsgemäßen Kompositzusammensetzung zur Anwendung kommen, lassen sich bevorzugte Formulierungen erzielen. Insbesondere für den Fall, dass ein flüssiger Ester eingesetzt wird, lassen sich hochviskose und gleichzeitig fließfähige Pasten mit sehr hohem Feststoffanteil (erdalkalimetallhaltiges Metallhydrid und Metallsalzadditiv) herstellen. Für den Fall, dass eine feste Carbonsäureesterverbindung eingesetzt wird, sind feste Formulierungen herstellbar, die bei Lagerung unter Raumtemperatur höhere mechanische und/oder chemische Stabilitäten aufweisen und erst während oder kurz vor der Reaktion, beispielsweise im Bereich zwischen 60 und 80 °C, aufschmelzen oder aufgeschmolzen werden. Diese Kompositzusammensetzungen sind vorteilhaft handzuhaben, da insbesondere die Dosierung maßgeblich erleichtert wird. Zudem wurde überraschenderweise festgestellt, dass die Reaktivität derartiger Formulierungen deutlich erhöht ist.

Zudem kann durch derartige Formulierungen eine Lageunabhängigkeit einer den Ester beinhaltenden oder verwendenden Vorrichtung zur Erzeugung von Wasserstoff erreicht werden, d. h. eine derartige Zusammensetzung kann in einem entsprechenden Reaktor beispielsweise von allen denkbaren Positionen, insbesondere auch entgegen der Schwerkraft zudosiert werden. Dies gilt insbesondere bei fließfähigen Formulierungen, die eine dynamische Viskosität von mehr als 10 mPa·s, bevorzugt 100 mPa·s, weiter bevorzugt von mehr als 10³ mPa·s, weiterhin bevorzugt von mehr als 10⁴ mPa·s, besonders bevorzugt von mehr als 10⁵ mPa·s, jeweils bei Standardbedingungen oder bei 80 °C und Normaldruck aufweisen.

Gemäß einer weiteren bevorzugten Ausführungsform bildet das mindestens eine Metallsalzadditiv des Kompositmaterials in wässriger Lösung oberhalb von pH=8 schwerlösliche Hydroxide und/oder das Hydroxid des Metallkations des Additivs weist eine Löslichkeit in Wasser und/oder in der mindestens einen aprotischen organische Substanz mit mindestens einer Carbonsäureestergruppe von weniger als 10⁻³ mol/L auf.

Bevorzugt ist ferner, dass das mindestens eine Metallsalzadditiv im Kompositmaterial nicht alkalisch mit Wasser reagiert.

Vorzugsweise ist das mindestens zweiwertige Metallkation des mindestens einen Metallsalzadditivs im Kompositmaterial ausgewählt aus den IUPAC-Gruppen 2, 3, 4, 5, 6, 7, 8, 10, 12, 13, 14 des Periodensystems der Elemente, insbesondere ausgewählt ist aus der Gruppe bestehend aus Zn²⁺, Ca²⁺, Mg²⁺, Sn²⁺, Ni²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺, *RE*⁴⁺, wobei *RE* die Lanthaniden La bis Lu des Periodensystems repräsentieren.

Gemäß der vorliegenden Erfindung ist es weiter bevorzugt, wenn das mindestens eine Additiv im Kompositmaterial als Metallchlorid, -fluorid, -bromid, - nitrat, -amid, -sulfat, -hydrogensulfat, -acetat, -butyrat, -formiat, -lactat, - malonat, -pyruvat, -tartrat oder -citrat vorliegt.

Das mindestens eine Additiv im Kompositmaterial ist weiter bevorzugt ausgewählt aus der Gruppe bestehend aus Zirconium-(IV)-chlorid, Zirconium-(IV)-acetat, Zirconium-(IV)-citrat, Zirconium-(IV)-formiat, Titan-(III)-chlorid, Eisen-(III)-chlorid, Eisen-(III)-acetat, Eisen-(III)-citrat, Eisen-(III)-formiat, Eisen-(II)-chlorid, Magnesiumchlorid, Magnesiumacetat, Magnesiumcitrat, Magnesiumformiat, Zinkchlorid, Zinkacetat, Zinkcitrat, Zinkformiat sowie Mischungen oder Kombinationen hieraus.
Besonders vorteilhaft ist, wenn die Gesamtmenge des Additivs im Kompositmaterial, bezogen auf die Gesamtmenge des Metallhydrids, klein ist. Insbesondere beträgt die Gesamtmenge des Additivs ≤ 15 mol-%, bevorzugt ≤5 mol-%, weiter bevorzugt ≤ 2,5 mol-%.

Die erdalkalimetallhaltige Metallhydride des Kompositmaterials sind ausgewählt aus der Gruppe bestehend aus MgH₂, CaH₂, Mg₂NiH₄, Mg₂FeH₆, Mg₂CoH₅, Mg₂(Fe_{1-*x*},Co*ₓ*)H*_{y}* [wobei gilt: 0 ≤ x ≤ 1; 5 ≤ y ≤ 6], Mg*ₓRE*_{*(*1-*x)*}H*_{y}* [wobei gilt: 0 < x ≤ 1; 0 < y ≤ 3], Mg*ₓTM*_{*(*1-*x)*}H*_{y}* [wobei gilt: 0 < x ≤ 1; 0 < y ≤ 3] sowie Mischungen und/oder Kombinationen hieraus, wobei *RE* die Lanthaniden La bis Lu des Periodensystems und *TM* die Übergangsmetalle des Periodensystems repräsentieren.
Ebenso ist es möglich, dass dem erdalkalimetallhaltigen Metallhydrid des Komposimaterials ein Additiv zur Verbesserung der Hydrierbarkeit und damit der Materialherstellung, ausgewählt aus der Gruppe bestehend aus *RE-*Oxiden, *TM*-Oxiden, *RE*-Nitriden, *TM*-Nitriden, *RE*-Carbiden, *TM*-Carbiden, *RE-*Halogeniden, *TM*-Halogeniden, Graphit, Graphen, Kohlenstoffnanoröhrchen, Fullerenen sowie Mischungen und/oder Kombinationen hieraus, wobei *RE* die Lanthaniden La bis Lu des Periodensystems und *TM* die Übergangsmetalle des Periodensystems repräsentieren, zugemischt ist.
Zusätzlich bzw. stattdessen kann das Kompositmaterial gemäß der vorliegenden Erfindung mindestens ein Phosphat-, Carbonat- oder Sulfat-Abfangreagenz, ein Abfangreagenz mindestens zweiwertiger Anionen und/oder ein Abfangreagenz für Chelatkomplexbildner, wie beispielsweise ein lösliches Lithium-, Calcium-, Magnesium- oder Eisen-(III)-salz zum Fällen von störenden Phosphat- oder Carbonationen oder zum gezielten Binden von Chelatkomplexbildnern wie EDTA oder Kronenethern oder ein lösliches Strontium- oder Bariumsalz zum Fällen störender Sulfationen umfassen.

Alternativ bzw. zusätzlich hierzu ist es ebenso möglich, dass das Kompositmaterial in einem wasserlöslichen Polymer, insbesondere beispielsweise Polyvinylalkohol, Stärke und/oder Zellulose, eingebettet, verkapselt oder eingeschweißt, oder mit einem solchen Polymer beschichtet oder zusammen verdichtet vorliegt.

Insbesondere liegt das Kompositmaterial gemäß der vorliegenden Erfindung als Granulat oder als Pulver, als Suspension, als Paste oder in verdichteter Form, wie beispielsweise als Tabletten, als Presslinge oder als verdichtete Schüttung, vor.

Ebenso ist es möglich, dass das Kompositmaterial mit einem elastischen und/oder plastisch verformbaren Behälter umhüllt vorliegen kann, insbesondere einer Blase aus einem Butyl-, Epichlorohydrin-, Ethylen-Propylen-, Fluoro-, Chloropren-, Chlor-Sulfat-Polyethylen-, Naturgummi-, Nitril-, Perfluoro-, Polyurethan- und/oder Silikonelastomer, einer Tube oder einem Schlauchbeutel. Die Tube bzw. der Schlauchbeutel können dabei ebenso aus den zuvor genannten Materialien gebildet sein.

Vor Einsatz und/oder zur Herstellung kann das mindestens eine Metallhydrid und/oder das mindestens eine Additiv des Kompositmaterials einer mechanischen Aktivierung unterzogen werden, beispielsweise durch Mahlen, Walzen oder Umformen.

Ferner ist es bevorzugt, dass das Kompositmaterial mindestens ein weiteres Material zur Erleichterung der Herstellung, ausgewählt aus der Gruppe bestehend aus Mahlhilfsmittel, wie beispielsweise Stearinsäure oder Isooctan, und/oder Hilfsmittel zur Verdichtung, wie beispielsweise Zinkstearat, Graphit, Magnesium oder ein Wachs, und/oder Verbesserung der Hydrolyseeigenschaften, wie beispielsweise mindestens ein wasserlösliches Polymer, insbesondere Polyvinylalkohole, Stärke oder Zellulose, enthält oder umfasst.

Auch ist es möglich, dass das enthaltene Kompositmaterial mit mindestens einem gegenüber dem Metallhydrid inerten Feststoff zusammen verdichtet vorliegt, der als Binde- und/oder Sprengmittel fungiert, wie beispielsweise mikrokristalline Cellulose oder Polyvinylpyrrolidon.

Vorzugsweise enthält das Kompositmaterial einen Feuchtigkeitsindikator, der sich bei Feuchtigkeitseinwirkung beispielweise charakteristisch verfärbt.

Besonders bevorzugte Formulierungen der Kompositmaterialien basieren dabei auf Magnesiumhydrid, Zirkoniumchlorid und/oder Magnesiumchlorid sowie Triacetin als bei Raumtemperatur flüssigem Carbonsäureester (z.B. Cyclohexandicarbonsäurediester) und/oder kommerziell erhältlichen carbonsäureesterbasierten Weichmachern (Phthalate oder deren Derivate). Die kommerziellen cyclohexandicarbonsäurediester- bzw. phthalsäurediesterhaltigen Weichmacher zeichnen sich dadurch aus, dass sie einen sehr hohen Siede-/ bzw. Zersetzungspunkt (typischerweise > 250 °C bei Normaldruck) bei gleichzeitig sehr niedrigem Schmelzpunkt (bzw. Pourpoint) von typischerweise weniger als -20 °C und sehr geringem Dampfdruck von typischerweise weniger als 10⁻³ hPa bei Standardbedingungen aufweisen. Insbesondere Triacetin sowie die Phthalsäure- und Cyclohexandicarbonsäurediester sind daher ideale Vertreter der Carbonsäureester für erfindungsgemäße Kompositmaterialien.

Die Erfindung betrifft zudem eine Vorrichtung zur hydrolytischen Erzeugung von Wasserstoff, die ein zuvor beschriebenes erfindungsgemäßes Kompositmaterial beinhaltet.

Das Funktionsprinzip der erfindungsgemäßen Vorrichtung beruht darauf, dass darin das Kompositmaterial mit Wasser oder einem wasserhaltigen Gemisch kontaktiert wird. Hierbei reagiert das erdalkalimetallhaltige Metallhydrid unter Bildung von Wasserstoff und Bildung eines erdalkalimetallhaltigen Metallhydroxids ab.

Das Kompositmaterial liegt zumindest als integraler Bestandteil der Vorrichtung zur Erzeugung von Wasserstoff vor. Eine entsprechende Vorrichtung kann beispielsweise ein Wasserstoffgasgenerator sein, der ein entsprechendes Reaktionsgefäß zur Umsetzung des Kompositmaterials, beispielsweise mit Wasser oder wasserhaltigen Lösungen, umfasst und ist im Folgenden genauer beschrieben.

Die Vorrichtung zur hydrolytischen Wasserstofferzeugung ist dadurch gekennzeichnet, dass darin das mindestens eine Kompositmaterial mit Wasser oder wasserhaltigen Gemischen kontaktiert und unter Bildung von Wasserstoff hydrolysiert wird.

Die Vorrichtung zur hydrolytischen Wasserstofferzeugung umfasst ferner vorteilhaft einen gasdichten Reaktionsraum, mindestens eine Zufuhr für das Kompositmaterial und/oder mindestens eine Zufuhr für das Wasser bzw. das wasserhaltige Gemisch in den Reaktionsraum sowie mindestens eine Ableitung für den entstehenden Wasserstoff.

Aufgrund einer einfacheren Realisierung ist es dabei insbesondere vorteilhaft, wenn der Reaktionsraum der Vorrichtung selbst keine elektrischen Bestandteile, insbesondere keine Elektroden, aufweist oder beinhaltet.

In einer Ausführungsvariante der Vorrichtung zur hydrolytischen Erzeugung von Wasserstoff ist es jedoch möglich, dass sich sowohl der (ggf. komplette) Vorrat als auch die Zufuhr für das Kompositmaterial innerhalb des gasdichten Reaktionsraums selbst befinden - zusätzlich oder alternativ dazu kann sich auch ein Vorrat und die Zufuhr für das Wasser bzw. für das wasserhaltige Gemisch innerhalb des gasdichten Reaktionsraums befinden. Speziell eine Vorrichtung, die auf einen diskontinuierlichen und/oder einmaligen Betrieb zur Wasserstofferzeugung ausgelegt ist, lässt sich dadurch einfacher gestalten, weil beispielsweise ein zweiter gasdichter Behälter zur Abschottung des Kompositmaterials von Luftfeuchtigkeit als Bestandteil der Vorrichtung entfallen kann.

Alternativ oder zusätzlich kann ein Kontakt zwischen den mindestens zwei Reaktanten in einer erfindungsgemäßen Vorrichtung durch eine Einheit mit Kapillarwirkung erfolgen, beispielsweise durch einen Docht, einen Schwamm oder durch Fasern. Diese Ausführungsform kann beispielsweise vorsehen, dass Bestandteile des Kompositmaterials, die in flüssiger Form vorliegen und/oder das Wasser bzw. das wasserhaltige Gemisch über die Einheit mit Kapillarwirkung transportiert wird. Beispielsweise kann die Einheit mit Kapillarwirkung in dem bereits zuvor angesprochenen bevorzugt vorhandenen gasdichten Reaktionsraum münden. Insbesondere wird das Wasser bzw. wasserhaltige Gemisch mittels der Einheit mit Kapillarwirkung transportiert.

Ferner kann der Kontakt zwischen den mindestens zwei Reaktanten durch eine irreversible Beschädigung oder Zerstörung einer Barriere zwischen den Reaktanten erfolgen, beispielsweise durch Bruch einer Glasampulle, die einen der Reaktanten enthält oder durch Durchstechen einer Membran, die die beiden Reaktanten separiert. Sowohl das Kompositmaterial als auch Wasser bzw. das wasserhaltige Gemisch können dabei in einem entsprechenden Kompartiment enthalten sein. Ebenso kann es gegeben sein, dass die Reaktanten durch eine Membran voneinander getrennt sind, die dann durchstochen werden kann.

Auch ist es möglich, dass die Vorrichtung mindestens eine Einspritzdüse für das Kompositmaterial und/oder für das Wasser bzw. wasserhaltige Gemisch umfasst und/oder dass die Vorrichtung mindestens ein Kondensations- und/oder Kühlelement für bei der Hydrolysereaktion entstehenden Wasserdampf enthält. Eine oder mehrere Einspritzdüsen erleichtern dabei beispielsweise eine bessere Durchmischung bzw. feinere Verteilung der Reaktanten, eine Kondensationseinheit kann für die Rückgewinnung von für die Reaktion benötigtem Wasser dienen und ebenso den in der Vorrichtung entstehenden Wasserstoff trocknen.

Alternativ oder zusätzlich dazu ist es möglich, dass die Vorrichtung mindestens eine Ableitung für die bei der Hydrolysereaktion entstehenden Abfallprodukte aus dem gasdichten Reaktionsraum enthält. Durch eine solche Einheit ist es beispielsweise möglich, eine Vorrichtung zur hydrolytischen Erzeugung von Wasserstoff semikontinuierlich oder kontinuierlich zu betreiben.

Die Erfindung betrifft in einer weiteren Ausführungsform ebenso eine Vorrichtung, in der das Kompositmaterial in einem vom Reaktionsraum separierten gasdichten Behälter vorgehalten wird. Dieser Behälter kann über eine Verbindungsleitung mit dem Reaktionsraum in Verbindung stehen. Durch diese Verbindungsleitung kann das Kompositmaterial gefördert werden.

In einer Ausführungsform der Vorrichtung wird das enthaltene Kompositmaterial und/oder Wasser bzw. wasserhaltiges Gemisch in einem elastischen und/oder plastisch verformbaren Behälter, beispielsweise einer Blase aus einem Butyl-, Epichlorohydrin-, Ethylen-Propylen-, Fluoro-, Chloropren-, Chlor-Sulfat-Polyethylen-, Naturgummi-, Nitril-, Perfluoro-, Polyurethan- und/oder Silikonelastomer, einer Tube oder einem Schlauchbeutel vorgehalten bzw. bereitgestellt. Beispielsweise ist das suspendierte oder pastenförmige Kompositmaterial vom elastischen und/oder plastisch verformbaren Behälter umhüllt und durch Ausübung von Druck (mechanisch / pneumatisch / hydraulisch) auf den elastischen / plastisch verformbaren Behälter kann das Kompositmaterial in den gasdichten Reaktionsraum transportiert werden.

Eine Variante der Erfindung schließt eine Vorrichtung ein, in der das Kompositmaterial durch eine Förderschnecke in den gasdichten Reaktionsraum dosiert wird und/oder dorthin transportiert wird.

Eine weitere Variante der Erfindung ist dadurch gekennzeichnet, dass die Vorrichtung alternativ oder zusätzlich eine Einheit enthält, welche die Durchmischung der Reaktanten im gasdichten Reaktionsraum induziert und/oder verbessert, beispielsweise ein Rührwerk oder ein Ultraschallgenerator.

Eine erfindungsgemäße Variante der Vorrichtung umfasst ebenso alternativ oder zusätzlich mindestens eine Einheit zur Reduktion der Partialdrücke flüchtiger Substanzen und/oder von Wasserdampf und/oder zur Retention von Aerosolen in oder nach der Ableitung für den entstehenden Wasserstoff, beispielsweise einen Adsorber auf Zeolith- oder Kieselgelbasis, eine wasserstoffpermeable Membran, einen Faser-, einen Membran- oder Sinterfilter. Solch eine Einheit kann vielfältige Aufgaben erfindungsgemäß lösen, beispielsweise den entstehenden Wasserstoff von Partikeln und/oder Wasserdampf befreien, als Flüssigkeitsbarriere dienen oder beispielsweise auch eine vollständig gassselektive Wasserstoffpermeation ermöglichen.

Eine weitere erfindungsgemäße Vorrichtung ist dadurch gekennzeichnet, dass diese eine Einheit zum Verhindern der Rückströmung von Wasser oder Wasserdampf aus dem Reaktionsraum in das Kompositmaterial umfasst, wie beispielsweise ein Rückschlagventil oder eine Schleuse. Insbesondere bei einem größeren Vorrat an Kompositmaterial bietet dies den Vorteil, dass die Reaktion durch Stoppen der Kompositmaterialzugabe unterbrochen werden kann, ohne dass das Kompositmaterial im Vorratsbehälter unerwünschterweise hydrolysiert.

Möglich ist auch eine Vorrichtung, die einen Wärmetauscher umfasst, wodurch beispielsweise über ein Thermofluid Wärme in den Reaktionsraum oder aus dem Reaktionsraum übertragen werden kann; eine Ausgestaltungsform dieser Möglichkeit ist dadurch gekennzeichnet, dass sich das Thermofluid in direktem Kontakt mit dem Kompositmaterial befindet und/oder Bestandteil desselben ist. In diesem Fall sollte das Thermofluid derart ausgestaltet sein, dass es gegenüber dem Kompositmaterial, insbesondere dem erdalkalimetallhaltigen Metallhydrid unreaktiv ist. Insbesondere sollte das Thermofluid ebenso einen Siedepunkt aufweisen, der oberhalb von 100 °C liegt.

Gemäß einer Ausgestaltungsform der Erfindung ist in der Vorrichtung eine Einheit zur Erkennung unerwünschter Hydrolyse des Kompositmaterials enthalten, beispielsweise realisiert durch einen Feuchtigkeitsindikator im Kompositmaterial und/oder einen Wasserstoff- und/oder Drucksensor im Vorratsbehälter für das Kompositmaterial. Eine weitere Variante einer solchen Einheit kann eine Messeinrichtung der elektrischen Leitfähigkeit des Kompositmaterials darstellen.

Eine Ausgestaltungsform der Erfindung ist dadurch gekennzeichnet, dass das wasserhaltige Gemisch, welches in der Vorrichtung mit dem Kompositmaterial kontaktiert wird, mindestens einen Stoff zur Gefrierpunktserniedrigung, beispielsweise Ethylenglykol, Ethanol, Glycerin, Magnesiumchlorid, Calciumchlorid, Kaliumchlorid oder Natriumchlorid, enthält.

Erfindungsgemäß ist ebenso möglich, dass das Kompositmaterial in der Vorrichtung *in situ* hergestellt und/oder zubereitet und/oder erzeugt wird. Dies kann beispielsweise durch eine in der Vorrichtung enthaltene Einheit, welche die zur Herstellung des Kompositmaterials benötigten Ausgangssubstanzen miteinander vermischt, zur Reaktion bringt und/oder verdichtet, erfolgen.

Zudem betrifft die vorliegende Erfindung ein Verfahren zur Erzeugung von Wasserstoff, bei dem ein erfindungsgemäßes Kompositmaterial mit Wasser oder einem wasserhaltigen Gemisch kontaktiert und unter Bildung von Wasserstoff hydrolisiert wird.

Hierzu kann Wasser in sämtlichen möglichen Aggregatszuständen verwendet werden, beispielsweise als Eis, als Flüssigkeit oder als Dampf. Dasselbe gilt für wasserhaltige Gemische. Bevorzugt wird Wasser bzw. ein wasserhaltiges Gemisch in flüssigem Aggregatszustand eingesetzt.

In einer bevorzugten Ausführungsform des erfindungsgemäßen Verfahrens wird das Gemisch aus Kompositmaterial und Wasser oder wasserhaltigem Gemisch in der Vorrichtung während der Hydrolyse temperiert, vorzugsweise bei Temperaturen zwischen 10 und 100°C, weiter bevorzugt zwischen 20 und 80°C.

Insbesondere erfolgt die Temperierung dadurch, dass ein Wärmeaustausch zwischen Abwärme einer Brennstoffzelle und/oder einer Verbrennungskraftmaschine und/oder der Reaktionswärme eines thermochemischen Energiespeichers und/oder einer chemischen Reaktion und/oder elektrisch erzeugter Wärme/Kälte und dem Kompositmaterial bzw. dem Reaktionsgemisch aus Kompositmaterial und Wasser erfolgt.

Beim erfindungsgemäßen Verfahren ist es zudem bevorzugt, dass zur Steuerung der Hydrolysereaktion bzw. zur Bestimmung der Hydrolyserate eine oder mehrere der folgenden Größen zeitabhängig und/oder zeitunabhängig überwacht und/oder geregelt und/oder gesteuert werden: Druck, Temperatur, Füllstand, Wasserstoffvolumen, pH, elektrische Leitfähigkeit, Rührgeschwindigkeit, zugegebene bzw. zuzugebende Menge des Kompositmaterials und/oder zugegebene bzw. zuzugebende Menge des Wassers bzw. des wasserhaltigen Gemischs.

Ferner betrifft die Erfindung eine Vorrichtung zur Erzeugung von elektrischer Energie, die eine Vorrichtung zur Erzeugung von Wasserstoff umfasst sowie nachgeschaltet eine Vorrichtung zur Erzeugung elektrischer Energie aus dem erzeugten Wasserstoff, insbesondere einer Brennstoffzelle oder einer Wärmekraftmaschine mit Generator.

Die Erfindung betrifft ebenso Verwendungen des Kompositmaterials, der Vorrichtung zur Erzeugung von Wasserstoff, bzw. der Vorrichtung zur Erzeugung elektrischer Energie bzw. des Verfahrens zur Erzeugung von Wasserstoff zur Versorgung von Backup- oder Notstromversorgungen, tragbaren elektronischen Geräten, Ladegeräten, Beleuchtung, maritimen Anwendungen, insbesondere Bojen und Signalzeichen, Sensoren und Sonden, autarken Funkstationen, Feldbatterien, Auftriebsgeneratoren, und/oder Demonstratoren z.B. für Schulen oder Messen mit elektrischer Energie und/oder Wasserstoff.

Die vorliegende Erfindung wird anhand der nachfolgenden Ausführungen näher erläutert, ohne die Erfindung auf speziell dargestellte Parameter zu beschränken.
Figur 1 zeigt die Protonenkonzentration (pH) der Suspension, die bei der Hydrolysereaktion entsteht, in Abhängigkeit der Hydrolysedauer für mechanisch aktiviertes Magnesiumhydrid ohne Additive und für Kompositmaterialien mit ausgewählten Metallsalzadditiven.
Figur 2 zeigt den Reaktionsumsatz der Hydrolysereaktion in Abhängigkeit der Hydrolysedauer für mechanisch aktiviertes Magnesiumhydrid ohne Additive und für Kompositmaterialien mit ausgewählten Metallsalzadditiven.
Figur 3 zeigt den Reaktionsumsatz der Hydrolysereaktion in Abhängigkeit der Hydrolysedauer von verdichtetem und unverdichtetem Kompositmaterial.
Figur 4 zeigt eine Ausgestaltungsform für ein erfindungsgemäßes Kompositmaterial (1), welches in eine Folie aus wasserlöslichem Polymer (2) mit Schweißnähten (3) eingeschweißt ist.
Figur 5 zeigt eine weitere Ausgestaltungsform für ein erfindungsgemäßes, verdichtetes Kompositmaterial (1), welches mit wasserlöslichem Polymer (4) beschichtet vorliegt.
Figur 6 zeigt eine weitere Ausgestaltungsform für ein erfindungsgemäßes Kompositmaterial (1), welches in wasserlöslichem Polymer (5) verkapseltet ist.
Figur 7 zeigt eine erste Ausführungsform einer erfindungsgemäßen Vorrichtung zur Erzeugung von Wasserstoff.
Figur 8 zeigt eine zweite erfindungsgemäße Vorrichtung zur Erzeugung von Wasserstoff.
Figur 9 zeigt eine dritte erfindungsgemäße Vorrichtung zur Erzeugung von Wasserstoff.
Figur 10 zeigt eine vierte erfindungsgemäße Vorrichtung zur Erzeugung von Wasserstoff.
Figur 11 zeigt den Reaktionsumsatz der Hydrolysereaktion von mechanisch aktiviertem Magnesiumhydrid mit Metallsalzadditiv in verschiedenen erfindungsgemäßen unpolaren oder wenig polaren Carbonsäureestern bzw. Gemischen mehrerer Carbonsäureester.
Figur 12 zeigt den Reaktionsumsatz der Hydrolysereaktion von mechanisch aktiviertem Magnesiumhydrid mit Metallsalzadditiv in einem nicht erfindungsgemäßen polaren aprotischen Suspensionsmittel aus der Gruppe der organischen Carbonate (Propylencarbonat).
Figur 13 zeigt Ausschnitte von Kernresonanzspektren des Carbonsäureesters 1,2,3-Propantrioltriacetat frisch aufgenommen sowie das Spektrum desselben Esters aufgenommen nach mehrmonatiger Lagerung als Komposit mit Magnesiumhydrid und einem Metallsalzadditiv unter verschiedenen Lagerungsbedingungen.

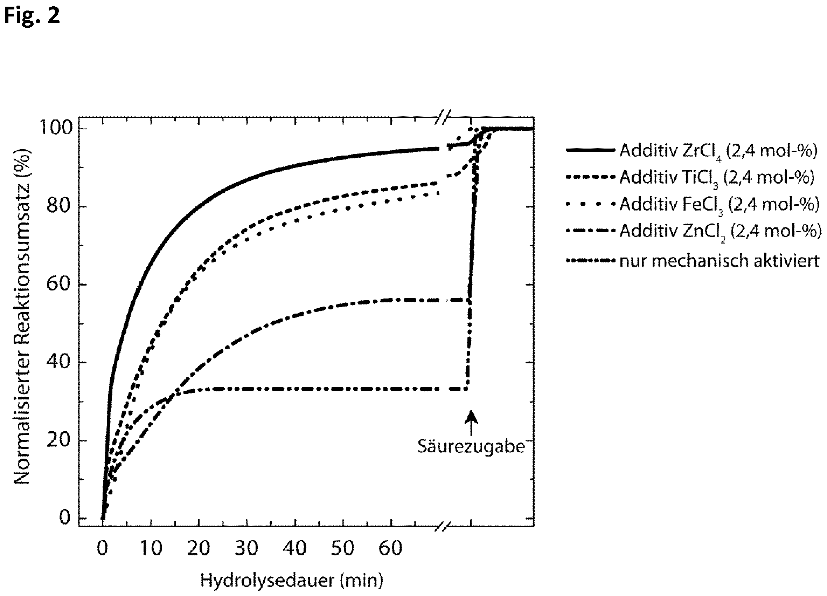

Die Lösung des Problems einer unzureichenden Reaktionskinetik und/oder einem Gesamtumsatz bei der Hydrolyse von hydrierten erdalkalimetallhaltigen Wasserstoffspeichermaterialien in Vorrichtungen zur hydrolytischen Wasserstofferzeugung besteht unter anderem auch in der Mischung des (ggf. mechanisch kurz aktivierten) zu hydrolysierenden Materials mit mindestens einem Additiv bestehend aus einem festen, wasserlöslichen und/oder unter Säurebildung hydrolysierbaren Salz mit mindestens zweiwertigen Kationen (z.B. Zn²⁺, Ca²⁺, Mg²⁺, Sn²⁺, Ni²⁺, Fe²⁺, Fe³⁺, Ti³⁺, Ga³⁺, Sc³⁺, Al³⁺, Y³⁺, *RE*³⁺, *RE*⁴⁺*,* Ti⁴⁺, Zr⁴⁺, Sn⁴⁺; *RE*=La - Lu). Überraschenderweise sind geringste Mengen vieler dieser Salze (z.B. 2,4 mol-% TiCl₃, 2,4 mol-% ZrCl₄, 2,4 mol-% FeCl₃ oder 2,4 mol-% ZnCl₂) in der Lage, die Hydrolysereaktion äußerst effektiv zu beschleunigen, so dass ein Reaktionsumsatz von teilweise über 90 % in weniger als 70 Minuten erreichbar ist, wobei der Reaktionsumsatz in diesen Fällen zur Separation des Beitrags des Metallsalzadditivs zur Beschleunigung der Reaktionskinetik ohne Ester gemessen wurde (siehe Figur 2).

Mehrere Tests haben gezeigt, dass auch die Hydrolyse von erdalkalimetallhaltigen Hydriden mit Additiven wie ZrCl₄ eine langsamere Reaktionskinetik und auch einen geringeren Gesamtreaktionsumsatz aufweist, wenn für die Hydrolyse nur Wasser zur Verfügung steht, welches beispielsweise Phosphationen enthält. Als Abhilfe dafür eignen sich spezielle Abfangreagenzien, wie beispielsweise Magnesiumcitrat oder Lithiumchlorid, die in stöchiometrischer Menge oder geringem Überschuss (bezogen auf die abzufangende Ionensorte) zum Metallhydrid zugegeben die Bildung von schwerlöslichen Salzen (z.B. Magnesiumphosphat) auf der Oberfläche des Hydrids wirkungsvoll verhindern. Die schwerlöslichen Salze fallen stattdessen feinverteilt in der Reaktionslösung aus.

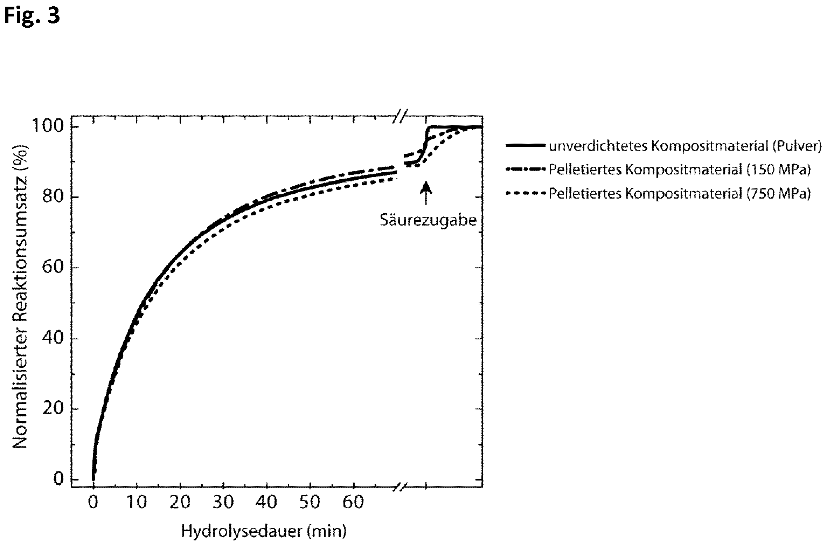

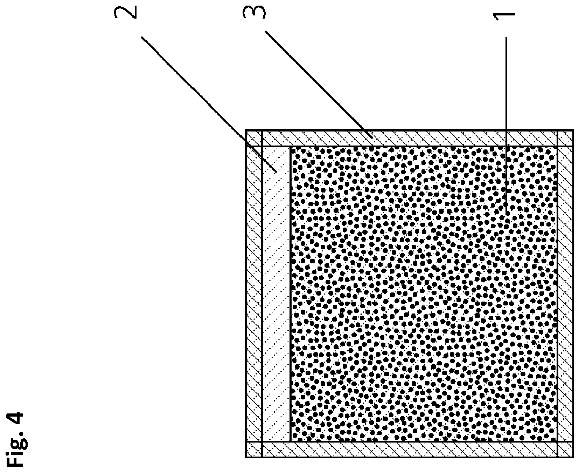

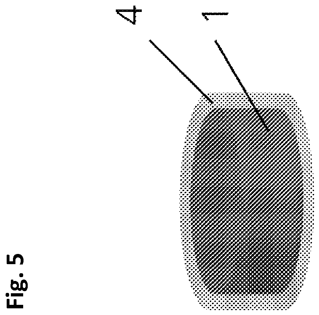

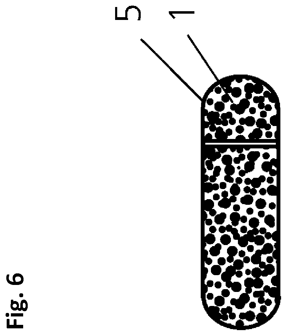

Eine Lösung des Problems einer unzureichenden Handhabbarkeit und Lagerfähigkeit des Metallhydridpulvers in der Vorrichtung konnte durch eine Verdichtung des Materials (z.B. durch uniaxiales Verpressen zu Tabletten oder durch Granulieren) und einem Einschluss des Materials in wasserlöslichen Polymeren wie Polyvinylalkohol erreicht werden. Überraschenderweise hatte ein Verdichten im Rahmen der Messtoleranzen der Bestimmung der Wasserstoffentwicklung bei vielen Additiven keinen messbaren oder nur einen sehr geringen Einfluss auf sowohl die Reaktionskinetik der Hydrolyse als auch auf den Reaktionsgesamtumsatz (Figur 3). Der Einschluss des Materials in ein wasserlösliches Polymer (Figur 4 bis 6) bewirkte dagegen sowohl eine signifikante Verbesserung der Lagerfähigkeit des Metallhydrids an Luft, als auch die gewünschte materialseitig realisierte Anlaufverzögerung für die Hydrolyse (Ausführungsbeispiel 1).

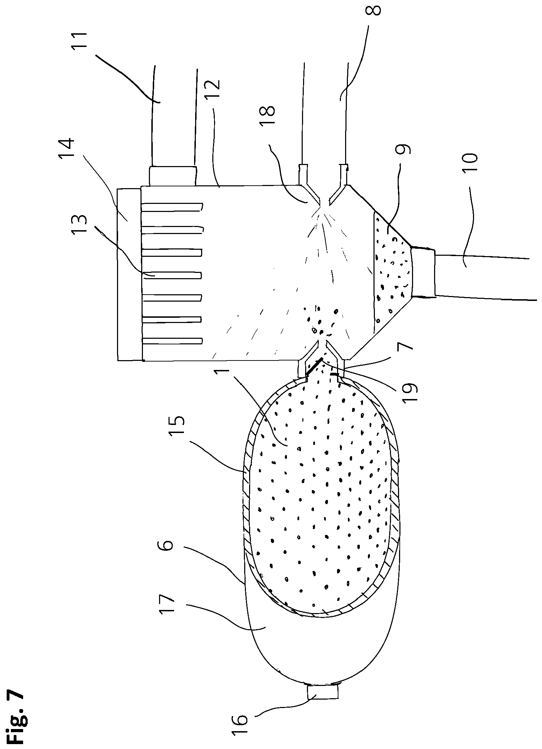

Figur 7 zeigt eine erste Ausführungsform einer erfindungsgemäßen Vorrichtung zur Erzeugung von Wasserstoff. Diese umfasst ein suspendiertes und/oder pastöses Kompositmaterial (1), welches in einem separaten Vorratsbehälter (6) vorliegt, durch eine Zufuhr (7) zusammen mit Wasser oder einem wasserhaltigem Gemisch (8) mittels einer Einspritzdüse (18) einem gasdichten Reaktionsraum (12) zugeführt werden kann, wobei eine Reaktionsmischung bzw. Abfallprodukte (9) entstehen, die über eine Ableitung (10) ebenso wie der entstehende Wasserstoff (11) aus dem Reaktionsraum entfernt werden können. Über ein Kühlelement für entstehenden Wasserdampf (13) sowie einen Lüfter (14) kann bei der Reaktion entstehender Wasserdampf rückkondensiert werden. Die Zufuhr des Kompositmaterials (1) kann über eine Gas- und/oder Flüssigkeitszufuhr (16) am Vorratsbehälter (6), welche durch Druckaufbau im Freiraum (17) des Vorratsbehälters auf eine darin befindliche Elastomerinnenblase (15) wirksam ist, geregelt werden. Eventuell in den Vorratsbehälter (6) rückströmender Wasserdampf aus dem gasdichten Reaktionsraum kann durch ein Rückschlagventil (19) unterbunden werden.

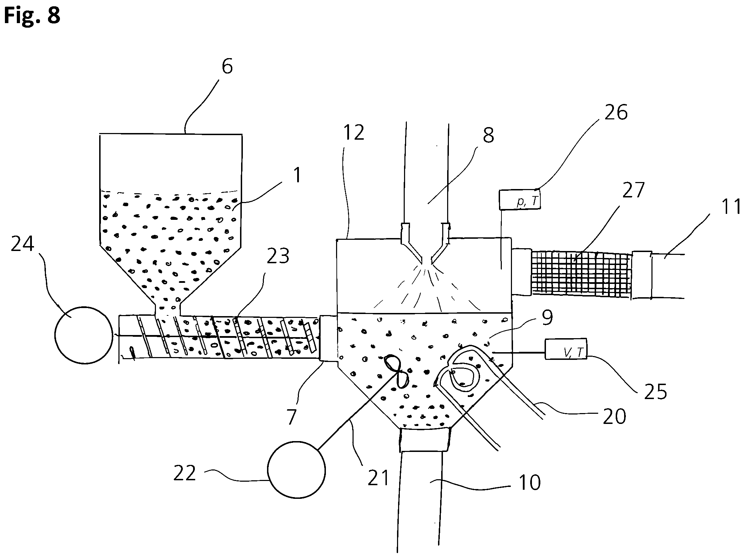

Figur 8 zeigt eine zweite erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches in einem separaten Vorratsbehälter (6) vorliegt, durch eine Zufuhr (7) zusammen mit Wasser oder einem wasserhaltigen Gemisch (8) dem gasdichten Reaktionsraum (12) zugeführt werden kann, wobei eine Reaktionsmischung bzw. Abfallprodukte (9) entstehen, die über eine Ableitung (10) ebenso wie der entstehende Wasserstoff (11) aus dem Reaktionsraum entfernt werden können. Über einen Wärmetauscher (20) kann dem Reaktionsraum Wärme entzogen oder zugeführt werden, ein Rührwerk (21) mit Antrieb (22) kann für die Durchmischung der Reaktionsmischung sorgen. Die Zufuhr des Kompositmaterials kann über eine Förderschnecke (23) mit Antrieb (24) erfolgen und über Mess-/Regeleinheiten für Füllstand, Temperatur (25) bzw. Druck, Temperatur (26) geregelt werden. Eine Einheit zur Reduktion der Partialdrücke flüchtiger Substanzen bzw. Partikelretention (27) kann den entstehenden Wasserstoff aufreinigen.

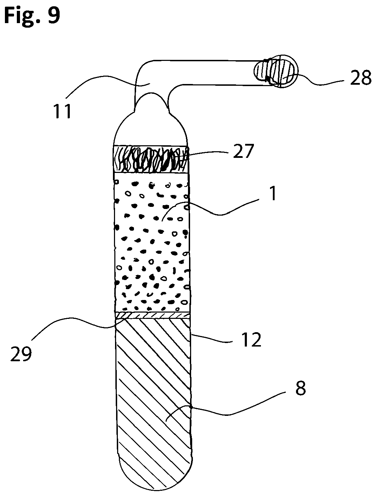

Figur 9 zeigt eine dritte erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches sich direkt im gasdichten Reaktionsraum (12) befindet. Die Wasserzufuhr (8) erfolgt hier durch irreversible Beschädigung einer Barriere (29), z.B. einer Membran. Eine Einheit zur Reduktion der Partialdrücke flüchtiger Substanzen bzw. Wasser- bzw. Partikelretention (27) kann den entstehenden Wasserstoff (11) aufreinigen. Ein gasdichter, entfernbarer Verschluss (28) kann der Verhinderung des Eindringens von Luft in die Vorrichtung vor Gebrauch dienen.

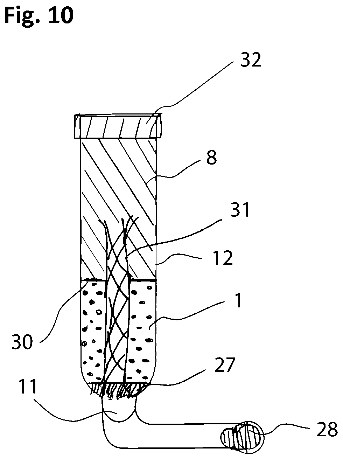

Figur 10 zeigt eine vierte erfindungsgemäße Vorrichtung zur Erzeugung von Wasserstoff. Diese umfasst ein pulverförmiges, verdichtetes, pastöses, suspendiertes, verkapseltes, eingeschweißtes oder beschichtetes Kompositmaterial (1), welches sich direkt im gasdichten Reaktionsraum (12) befindet. Die Wasserzufuhr (8) der durch eine permanente Barriere (30) getrennten Reaktanten erfolgt hier durch eine Einheit mit Kapillarwirkung (31), in der Figur durch einen Docht angedeutet. Eine Einheit zur Reduktion der Partialdrücke flüchtiger Substanzen bzw. Wasser- bzw. Partikelretention (27) kann den entstehenden Wasserstoff (11) aufreinigen. Ein gasdichter, entfernbarer Verschluss (28) kann der Verhinderung des Eindringens von Luft in die Vorrichtung vor Gebrauch dienen, ein weiterer Verschluss (32) kann zur Befüllung der Vorrichtung mit Wasser oder wasserhaltigen Gemischen dienen.

Figur 11 zeigt den Reaktionsumsatz der Hydrolysereaktion von mechanisch aktiviertem Magnesiumhydrid mit Metallsalzadditiv, suspendiert in den erfindungsgemäßen unpolaren oder wenig polaren, bei Raumtemperatur flüssigen Carbonsäureestern bzw. Mischungen de Carbonsäureester 1,2-Cyclohexandicarbonsäurediisononylester und 1,2,3-Propantrioltriacetat, in den gravimetrischen Mischungsverhältnissen 7:0:5 (33); 200:66:1 (34); 10:9:1 (35) und 5:4:1 (36), wobei das Mischungsverhältnis in der Reihenfolge Feststoffe:Ester 1:Ester 2 angegeben ist. Die Säurezugabe (37) dient der Normierung des Reaktionsfortschrittes.

Figur 12 zeigt den Reaktionsumsatz der Hydrolysereaktion von mechanisch aktiviertem Magnesiumhydrid mit Metallsalzadditiv, suspendiert im nicht erfindungsgemäßen polaren Kohlensäureester Propylencarbonat (38) zum Vergleich. Erst nach Säurezugabe (37) reagiert der größere Teil des Materials.

Figur 13 zeigt Ausschnitte von ¹H-Kernresonanzspektren des Carbonsäureesters 1,2,3-Propantrioltriacetat frisch aufgenommen (39) sowie das Spektrum desselben Esters aufgenommen jeweils nach mehrmonatiger Lagerung als Komposit mit Magnesiumhydrid und einem Metallsalzadditiv unter Argon (40), an trockener Luft (41) und an feuchter Luft (42). Spuren organischer Verunreinigungen (43) lassen sich nur bei mehrmonatiger Lagerung unter dem Einfluss von Luftfeuchtigkeit feststellen. Die erfindugnsgemäßen Kompositmaterialien sind daher äußerst lagerstabil.

Mögliche Anwendungsfelder umfassen u.A.:
- kleine bis mittlere Backup- oder Notstromversorgungen
- tragbare elektronische Geräte und Ladegeräte
- Camping- und Outdoorbereich
- Beleuchtung
- maritime Anwendungen (Bojen und Signalzeichen)
- Sensoren und Sonden
- autarke Funkstationen
- militärischer Bereich (z.B. Feldbatterien)
- Auftriebsgeneratoren (zur Erzeugung von Wasserstoff als Auftriebsgas)
- Demonstratoren (z.B. für Schulen oder Messen)

### Ausführungsbeispiele

Die Reaktionsumsätze aller Ausführungsbeispiele wurden durch Messungen des zum jeweiligen Zeitpunkt entstandenen Wasserstoffvolumens in einer Vorrichtung zur hydrolytischen Erzeugung von Wasserstoff ermittelt. Zur Normalisierung diente das jeweils insgesamt (nach Zugabe einer Brønsted-Säure im Überschuss) ermittelte Gesamtwasserstoffvolumen nach beendeter Reaktion. Alle gemessenen Volumina wurden mittels des ermittelten Luftdrucks, der *in situ* gemessenen Temperatur sowie des Wasserdampfpartialdrucks bei den gegebenen Bedingungen auf Normbedingungen umgerechnet.

### Beispiel 1 (Vergleichsbeispiel)

Jeweils ca. 2 g mechanisch kurz (≤ 1 h) aktivierter Kompositmaterialien bestehend aus MgH₂ und verschiedenen Additiven wurden in vorgetrockneten PVA-Folien eingeschweißt (unter Argon und unter Vakuum). Eine sichtbare Hydrolyse des Metallhydrids oder eines der Additive (Aufblähung der Folie) wurde auch nach einer Lagerdauer von mehr als einem Monat (an trockener Luft) nicht beobachtet. Anschließend durchgeführte Hydrolysen in einer Vorrichtung zur hydrolytischen Wasserstofferzeugung ergab eine Anfangsverzögerung der Reaktionen von mindestens 15 Sekunden.

### Beispiel 2

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr sowie einer Kompositmaterialzufuhr mit 13 g einer mechanisch kurz (≤ 1 h) aktivierten pastösen Mischung aus 4 g trockenem 1,2,3-Propantrioltriacetat sowie 9 g MgH₂ mit 2,4 mol-% MgCl₂ wurde zunächst mit Argon freigespült. Im Anschluss wurden sukzessive 6, 12, 25 und 40 mL entionisiertes Wasser in den Reaktionsraum zudosiert. Am Gasausgang wurden nach der jeweiligen Wasserdosis Gesamtwasserstoffnormvolumina von 3200 mL, 7800 mL, 11600 mL und 13400 mL entsprechend 24 %, 58 %, 86 %, 99 % Gesamtumsatz nach jeweils weniger als 5 Minuten Reaktionsdauer nach Wasserzugabe registriert. Dabei wurde ein sehr gutes Wiederanlaufverhalten (Dauer weniger als 1 Minute) nach den einzelnen Wasserdosierungen festgestellt.

### Beispiel 3

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr sowie einer Kompositmaterialzufuhr mit 2 g einer mechanisch kurz (≤ 1 h) aktivierten pastösen Mischung aus 1 g trockenem 1,2,3-Propantrioltriacetat sowie 1 g MgH₂ mit 1,1 mol-% ZrCl₄ wurde zunächst mit Argon freigespült. Im Anschluss wurden 6,2 mL entionisiertes Wasser in den Reaktionsraum zudosiert. Der Gesamtumsatz der Hydrolyse betrug 97 % nach nur 160 Sekunden Reaktionsdauer.

### Beispiel 4

Eine Vorrichtung zur hydrolytischen Wasserstofferzeugung bestehend aus einem gasdichten Reaktionsraum, einer Wasserstoffableitung mit integriertem Sintermetallfilter, einem wassergekühlten Dampfkondensator, einer Wasserzufuhr, einem Wärmetauscher sowie einer Kompositmaterialzufuhr mit 1,5 g einer mechanisch kurz (≤ 1 h) aktivierten, dann bei 150 MPa Pressdruck zu einer Tablette kompaktierten Mischung aus 0,5 g Pentaerythrittetrastearat sowie 1 g MgH₂ mit 1,1 mol-% ZrCl₄ wurde zunächst mit Argon freigespült. Im Anschluss wurden 6,2 mL entionisiertes Wasser der Temperatur 25 °C in den Reaktionsraum zudosiert. Auch nach fast einer Stunde betrug der Gesamtumsatz der Hydrolyse weniger als 2 %. Im Anschluss wurde der gasdichte Reaktionsraum über den Wärmetauscher auf 70 °C aufgeheizt. Unmittelbar nach dem stattfindenden Schmelzen des Pentaerythrittetrastearats fand ein Reaktionsumsatz von 100 % innerhalb von 340 Sekunden statt.

### Beispiel 5

Eine Vorrichtung zur hydrolytischen Wasserstofferzeugung bestehend aus einem gasdichten Reaktionsraum, einer Wasserstoffableitung mit integriertem Membranfilter sowie einem Gasvolumenzähler zur Messung des Reaktionsfortschritts, einem wassergekühlten Dampfkondensator, einer Wasserzufuhr sowie einer Kompositmaterialzufuhr mit jeweils insgesamt 1 g einer mechanisch kurz (ca. 5 Minuten) aktivierten pastösen Mischung aus MgH₂ mit 2 mol-% MgCl₂ sowie 1,2-Cyclohexandicarbonsäurediisononylester und 1,2,3-Propantrioltriacetat in den gravimetrischen Mischungsverhältnissen 7:0:5, 200:66:1, 10:9:1 und 5:4:1 wurde zunächst mit Argon freigespült. Im Anschluss wurden ca. 2,8 mL entionisiertes Wasser der Temperatur 25 °C in den Reaktionsraum zudosiert. Nach ca. 20 Minuten wurde ein Überschuss an Amidosulfonsäure als Brønsted-Säure zur Normierung des Reaktionsfortschritts zudosiert. Die aus den gemessenen Gasvolumina berechneten Reaktionsfortschritte sind in Figur 11 abgebildet.

### Beispiel 6

Eine Vorrichtung zur hydrolytischen Wasserstofferzeugung bestehend aus einem gasdichten Reaktionsraum, einer Wasserstoffableitung mit integriertem Sintermetallfilter sowie einem Gasvolumenzähler zur Messung des Reaktionsfortschritts, einem wassergekühlten Dampfkondensator, einer Wasserzufuhr sowie einer Kompositmaterialzufuhr mit insgesamt 2 g einer nicht erfindungsgemäßen mechanisch kurz (≤ 1 h Minuten) aktivierten pastösen Mischung aus 1 g MgH₂ mit 1,1 mol-% ZrCl₄ sowie 1 g des Kohlensäureesters Propylencarbonat wurde zunächst mit Argon freigespült. Im Anschluss wurden ca. 6,2 mL entionisiertes Wasser der Temperatur 25 °C in den Reaktionsraum zudosiert. Nach ca. 7 Minuten wurde ein Überschuss an Amidosulfonsäure als Brønsted-Säure zur Normierung des Reaktionsfortschritts zudosiert. Die aus den gemessenen Gasvolumina berechneten Reaktionsfortschritte sind in Figur 12 abgebildet.

## Patentansprüche

1. Kompositmaterial zur hydrolytischen Erzeugung von Wasserstoff, enthaltend oder bestehend aus
a) mindestens ein erdalkalimetallhaltiges Metallhydrid, ausgewählt aus der Gruppe bestehend aus MgH₂, CaH₂, Mg₂NiH₄, Mg₂FeH₆, Mg₂CoH₅, Mg₂(Fe_{1-*x*}Co*ₓ*)H*_{y}* mit 0 ≤ x ≤ 1; 5 ≤ y ≤ 6, Mg*ₓRE*_{*(*1-*x)*}H*_{y}* mit 0 < x ≤ 1; 0 < y ≤ 3, Mg*ₓTM*_{*(*1-*x)*}H*_{y}* mit 0 < x ≤ 1; 0 < y ≤ 3 sowie Mischungen und/oder Kombinationen hieraus, wobei *RE* die Lanthaniden La bis Lu des Periodensystems und *TM* die Übergangsmetalle des Periodensystems repräsentieren
b) mindestens ein Additiv, ausgewählt aus der Gruppe bestehend aus wasserlöslichen und/oder durch Wassereinwirkung zersetzbaren Metallsalzen mit mindestens zweiwertigen Metallkationen, sowie
c) mindestens eine aprotische organische Substanz mit mindestens einer Carbonsäureestergruppe, die nicht oder nur teilweise mit Wasser mischbar ist und eine Löslichkeitsobergrenze von weniger als 25 Gew.-% (entsprechend 250 g Ester / kg Wasser) bei 25 °C aufweist.

2. Kompositmaterial nach Anspruch 1, **dadurch gekennzeichnet, dass** die mindestens eine aprotische organische Substanz mit mindestens einer Carbonsäureestergruppe bei Normaldruck
a) einen Schmelzpunkt von weniger als 100 °C, bevorzugt von 25 bis 95 °C oder von weniger als -20 °C und/oder
b) einen Siedepunkt von mehr als 100 °C, bevorzugt von mehr als 150 °C und/oder
c) einen Dampfdruck von weniger als 1 hPa bei 20 °C, bevorzugt von weniger als 10 Pa bei 20 °C, weiter bevorzugt von weniger als 0,4 Pa bei 20 °C, besonders bevorzugt von weniger als 10⁻² Pa bei 20 °C
aufweist,
bevorzugt genau eine, zwei, drei oder vier Carbonsäureestergruppen enthält, weiter bevorzugt eine Löslichkeitsobergrenze in Wasser von weniger als 9 Gew.-% (entsprechend 90 g Ester / kg Wasser) aufweist,
besonders bevorzugt ausgewählt ist aus der Gruppe bestehend aus
a) bei Raumtemperatur flüssigen Carbonsäureestern, insbesondere Octandisäure-1,8-dimethylester; Pentandisäure-1,5-dipropylester; Heptandisäure-1,7-diethylester; Oxacyclotridecan-2-on; Hexandisäure-1,6-dipropylester; Decandisäure-1,10-dimethylester; Butandisäure-1,4-dibutylester; Octandisäure-1,8-diethylester; Nonandisäure-1,9-diethylester; Pentandisäure-1,5-dibuylester; Propandisäure-1,5-dipentylester; Dodecansäuremethylester; Undecansäureethylester; Octansäurepentylester; Hexansäureheptylester; Hexandisäure-1,6-dibutylester; Decandisäure-1,10-diethylester; Hexandisäure-1,6-bis(2-methylpropyl)-ester; Butandisäure-1,4-dipentylester; Dodecansäureethylester; Essigsäuredodecylester; Heptansäureheptylester; Octansäurehexylester; Hexansäureoctylester; 2,2,4,4-Pentantetracarboxylsäure-1,2,4,5-tetraethylester; 1,4-Dioxacycloheptadecan-5,17-dion; Butansäure-1,2,3-propantriylester; Tributtersäureglycerinester; Octansäureheptylester; Heptansäureoctylester; Hexansäurenonylester; Tetradecansäureethylester; Octansäureoctylester; Tetradecansäure-1-methylester; Hexansäureundecylester; 1-Hexadecanol-1-acetat; Decansäureoctylester; Hexadecansäure-1-methylester; Decansäuredecylester; Hexandisäure-1,6-dioctylester; Hexandisäure-1-decyl-6-octylester; Hexandisäure-1,6-dinonylester; Nonandisäure-1,9-bis(2-ethylhexyl)-ester; 1,2,3-Propantriol-1,2,3-triacetat [Triacetin]; Octansäure-1,1',1"-(1,2,3-propantriyl)-ester [Glycerintricaprylat]; Decandisäure-1,10-bis(2-ethylhexyl)-ester [Dioctylsebacat]; Hexandisäure-1,6-bis(2-ethylhexyl)-ester; Decandisäure-1,10-dibutylester; Decansäure-1,1',1"-(1,2,3-propantriyl)-ester [Glycerintricaprinat]; Tridecansäuremethylester; Tetradecansäurebutylester; Hexansäure-1,1',1"-(1,2,3-propantriyl)-ester [Glycerintricapronat]; Hexadecansäure-(2-ethylhexyl)-ester; Hexandisäure-1,6-dihexylester; Nonandisäure-1,9-dihexylester; Hexandisäure-1,6-diheptylester; Nonansäurebutylester; Dodecansäurehexylester; Nonansäurepentylester; Nonansäureheptylester; Nonansäure-1,9-bis(2-ethylbutyl)-ester; Hexandisäure-1,6-bis(2-ethylbutyl)-ester; Hexansäuretetradecylester; Hexansäuretridecylester; Cyclohexandicarbonsäurediester, bevorzugt mit linearen oder verzweigten aliphatischen Alkylalkoholatresten an den Estergruppen -OR, wobei R 1 bis 20 Kohlenstoffatome umfasst, insbesondere 1,2-Cyclohexandicarbonsäurediisononylester (DINCH)
b) bei Raumtemperatur festen Carbonsäureestern, insbesondere Tetradecansäuremethylester; Hexadecansäuremethylester; Dodecansäureethylester; Octadecansäuremethylester; Eicosansäuremethylester; Decandisäure-1,10-dimethylester; Docosansäuremethylester; Hexadecansäure-1-methylethylester; Tridecandisäure-1,13-dimethylester; Octadecansäurebutylester; Eicosansäureethylester; Docosansäureethylester; Hexadecandisäure-1,16-dimethylester; 1,12-Dodecandisäure-1,12-diacetat; Hexadecansäurehexadecylester; Hexandisäure-1,6-dioctylester; Octadecandisäure-1,18-diethylester; Butansäure-1,2,3-propantriylester; 1,1,2,2-Ethantetracarboxylsäure-1,1,2,2-tetraethylester; Oxacyclotridecan-2-on ; Hexadecansäure-1,1',1"-(1,2,3-propantriyl)-ester [Tripalmitin]; Tetradecansäure-1,1',1"-(1,2,3-propantriyl)-ester [Trimyristin]; 2,2-Bis(octadecanoyloxymethyl)-1,3-propandiyldioctadecanoat [Pentaerythrittetrastearat]; Octadecansäureoctadecylester [Stearylstearat] ; Docosansäure-1,1',1"-(1,2,3-propantriyl)-ester [Tribehenin]; Nonadecansäureethylester; Docosansäuredocosylester [Behenylbehenat]; Decansäure-1,1',1"-(1,2,3-propantriyl)-ester [Tricaprin]; 2,2-Bis[(acetyloxy)methyl]-propan-1,3-diol-1,3-diacetat; Octadecansäure-1,1',1"-(1,2,3-propantriyl)-ester [Glycerintristearat]; 2-Octadecanoyloxyethyloctadecanoat [Ethylenglycoldistearat]; Dodecansäure-1,1',1"-(1,2,3-propantriyl)-ester [Trilaurin],
c) Weichmachern, insbesondere Weichmacher ausgewählt aus der Gruppe der Phthalate, wie z.B. Diisodecylphthalat und/oder Diisononylphthalat und der Phthalat-Derivate sowie
d) Mischungen und Kombinationen aus mindestens zwei der unter a) bis c) genannten Carbonsäureester.

3. Kompositmaterial nach einem der vorhergehenden Ansprüche, **dadurch gekennzeichnet, dass** die mindestens eine aprotische organische Substanz mit mindestens einer Carbonsäureestergruppe eine variable Zusammensetzung aufweist, insbesondere Alkoholatreste variabler Zusammensetzung und/oder unterschiedlicher Isomerie an einer oder mehreren Carbonsäureestergruppen besitzt.

4. Kompositmaterial nach einem der vorhergehenden Ansprüche, **dadurch gekennzeichnet, dass** die Gesamtmenge der mindestens einen aprotischen organischen Substanz mit mindestens einer Carbonsäureestergruppe in der Zubereitung zwischen 1 und 80 Gew.-%, bevorzugt zwischen 5 und 70 Gew.-%, weiter bevorzugt zwischen 10 und 60 Gew.-%, weiter bevorzugt zwischen 21 und 50 Gew.-%, besonders bevorzugt zwischen 30 und 49 Gew.-% beträgt und/oder die Gesamtmenge des darin enthaltenen mindestens einen Additivs bezogen auf die Gesamtmenge des Metallhydrids ≤ 15 mol-%, bevorzugt ≤ 5 mol-%, weiter bevorzugt ≤ 2,5 mol-% beträgt.

5. Kompositmaterial nach einem der vorhergehenden Ansprüche, **dadurch gekennzeichnet, dass** das mindestens zweiwertige Metallkation des mindestens einen Additivs ausgewählt ist aus der Gruppe bestehend aus den IUPAC-Gruppen 2, 3, 4, 5, 6, 7, 8, 10, 12, 13, 14 des Periodensystems der Elemente, insbesondere ausgewählt ist aus der Gruppe bestehend aus Zn²⁺, Ca²⁺, Mg²⁺, Sn²⁺, Ni²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺, *RE*⁴⁺, wobei *RE* die Lanthaniden La bis Lu des Periodensystems repräsentieren.

6. Kompositmaterial nach einem der vorhergehenden Ansprüche, **dadurch gekennzeichnet, dass** das im Kompositmaterial enthaltene mindestens eine Additiv in wässriger Lösung oberhalb von pH=8 schwerlösliche Hydroxide bildet und/oder dass das Hydroxid des Metallkations des Additivs eine Löslichkeit in Wasser und/oder in der mindestens einen aprotischen organischen Substanz mit mindestens einer Carbonsäureestergruppe von jeweils weniger als 10⁻³ mol/L aufweist,
bevorzugt nicht alkalisch mit Wasser reagiert,
weiter bevorzugt als Metallchlorid, -fluorid, -bromid, -nitrat, -amid, -sulfat, - hydrogensulfat, -acetat, -butyrat, -formiat, -lactat, -malonat, -pyruvat, - tartrat oder -citrat vorliegt und insbesondere aus der Gruppe bestehend aus Zirconium-(IV)-chlorid, Zirconium-(IV)-acetat, Zirconium-(IV)-citrat, Zirconium-(IV)-formiat, Titan-(III)-chlorid, Eisen-(III)-chlorid, Eisen-(III)-acetat, Eisen-(III)-citrat, Eisen-(III)-formiat, Eisen-(II)-chlorid, Magnesiumchlorid, Magnesiumacetat, Magnesiumcitrat, Magnesiumformiat, Zinkchlorid, Zinkacetat, Zinkcitrat, Zinkformiat sowie Mischungen oder Kombinationen hieraus ausgewählt ist.

7. Kompositmaterial nach einem der vorhergehenden Ansprüche, **dadurch gekennzeichnet, dass** dieses
a) keine Substanzen enthält, die Hydroxidionen und/oder Wasser enthalten oder freisetzen und/oder
b) frei von gegenüber dem Metallhydrid chemisch inerten Trägerflüssigkeiten ohne Carbonsäureestergruppen, insbesondere Alkanen, ist
und gegebenenfalls
• ein oder mehrere Phosphat-, Carbonat- oder Sulfat-Abfangreagenzien, ein Abfangreagenz mindestens zweiwertiger Anionen und/oder ein Abfangreagenz für Chelatbildner, wie beispielsweise ein wasserlösliches Lithium-, Calcium-, Magnesium- oder Eisen-(III)-salz zum Fällen von störenden Phosphat- oder Carbonationen oder zum gezielten Binden von Chelatbildnern wie EDTA oder Kronenethern oder ein lösliches Strontium- oder Bariumsalz zum Fällen störender Sulfationen,
• ein oder mehrere Materialien zur Erleichterung der Herstellung, ausgewählt aus der Gruppe bestehend aus Mahlhilfsmitteln, wie beispielsweise Stearinsäure oder Isooctan, und/oder ein Hilfsmittel zur Verdichtung, wie beispielsweise Zinkstearat, Graphit oder ein Wachs, und/oder ein Material zur Verbesserung der Hydrolyseeigenschaften, wie beispielsweise mindestens ein wasserlösliches Polymer, insbesondere ein Polyvinylalkohol, Stärke oder Zellulose,
• einen oder mehrere gegenüber dem Metallhydrid inerte Feststoffe enthält, die als Binde- und/oder Sprengmittel fungieren, wie beispielsweise mikrokristalline Cellulose oder Polyvinylpyrrolidon,
• einen Feuchtigkeitsindikator, der sich bei Feuchtigkeitseinwirkung beispielweise charakteristisch verfärbt,
enthält.

8. Kompositmaterial nach einem der vorhergehenden Ansprüche, **dadurch gekennzeichnet, dass** dieses in einem wasserlöslichen Polymer, insbesondere beispielsweise einem Polyvinylalkohol, Stärke und/oder Zellulose,
eingebettet, verkapselt oder eingeschweißt, oder mit einem solchen Polymer beschichtet oder zusammen verdichtet vorliegt.

9. Kompositmaterial nach einem der vorhergehenden Ansprüche, **dadurch gekennzeichnet, dass** dieses
a) in Form eines Granulats oder Pulvers, einer Suspension, einer Paste oder in verdichteter Form, wie beispielsweise Tabletten, Presslingen oder verdichteten Schüttungen, und/oder
b) umhüllt mit einem elastischen Behälter, beispielsweise einer Blase aus einem Butyl-, Epichlorohydrin-, Ethylen-Propylen-, Fluoro-, Chloropren-, Chlor-Sulfat-Polyethylen-, Naturgummi-, Nitril-, Perfluoro-, Polyurethan- und/oder Silikonelastomer, und/oder
c) umhüllt mit einem plastisch verformbaren Behälter, beispielsweise einer Tube oder einem Schlauchbeutel,
vorliegt.

10. Kompositmaterial nach einem der vorhergehenden Ansprüche, **dadurch gekennzeichnet, dass** mindestens eine Komponente, insbesondere das mindestens eine Metallhydrid und/oder das mindestens eine Additiv einer mechanischen Aktivierung unterzogen wurde, beispielsweise durch Mahlen, Walzen oder Umformen.

11. Vorrichtung zur hydrolytischen Erzeugung von Wasserstoff, umfassend mindestens ein Kompositmaterial nach einem der vorhergehenden Ansprüche.

12. Vorrichtung nach vorhergehendem Anspruch, **dadurch gekennzeichnet, dass** diese
• mindestens einen gasdichten Reaktionsraum, mindestens eine Zufuhr für das Kompositmaterial und/oder mindestens eine Zufuhr für Wasser bzw. ein wasserhaltiges Gemisch sowie mindestens eine Ableitung für den entstehenden Wasserstoff
umfasst, wobei sich Vorrat sowie Zufuhr des Kompositmaterials und/oder Vorrat sowie Zufuhr des Wassers bzw. wasserhaltigen Gemischs bevorzugt innerhalb des gasdichten Reaktionsraumes befinden,
sowie außerdem gegebenenfalls
• eine oder mehrere Einspritzdüsen für das Kompositmaterial und/oder für Wasser bzw. wasserhaltiges Gemisch, und/oder
• eine oder mehrere Ableitungen für die bei der Hydrolysereaktion entstehenden Abfallprodukte aus dem gasdichten Reaktionsraum, und/oder
• eine oder mehrere Einheiten, welche die Durchmischung der Reaktanten im gasdichten Reaktionsraum induziert und/oder verbessert, beispielsweise ein Rührwerk oder ein Ultraschallgenerator, und/oder
• eine oder mehrere Einheiten zur Reduktion der Partialdrücke flüchtiger Substanzen und/oder von Wasserdampf und/oder zur Retention von Aerosolen in oder nach der Ableitung für den entstehenden Wasserstoff umfasst, beispielsweise einen Adsorber auf Zeolith- oder Kieselgelbasis, eine wasserstoffpermeable Membran, einen Faser-, Membran- oder Sinterfilter, und/oder
• eine Einheit zum Verhindern der Rückströmung von Wasser oder Wasserdampf aus dem Reaktionsraum in das Kompositmaterial, beispielsweise ein Rückschlagventil oder eine Schleuse, und/oder
• einen Wärmetauscher, wodurch beispielsweise über ein Thermofluid Wärme in den Reaktionsraum oder aus dem Reaktionsraum übertragen werden kann, wobei sich das Thermofluid bevorzugt in direktem Kontakt mit dem Kompositmaterial befindet und/oder Bestandteil desselben ist, und/oder
• eine Einheit zur Erkennung unerwünschter Hydrolyse im Kompositmaterial, beispielsweise einen Feuchtigkeitsindikator im Kompositmaterial und/oder einen Wasserstoffsensor im Vorratsbehälter für das Kompositmaterial, und/oder
• eine Einheit mit Kapillarwirkung, mittels der ein Kontakt zwischen dem Kompositmaterial und dem für die Hydrolyse verwendeten Wasser oder dem wasserhaltigen Gemisch hergestellt werden kann, beispielsweise einen Docht, einen Schwamm oder Fasern
umfasst.

13. Vorrichtung nach Anspruch 11, **dadurch gekennzeichnet, dass** das Kompositmaterial oder das für die Hydrolyse verwendete Wasser und das wasserhaltige Gemisch mittels einer zerstörbaren Barriere voneinander getrennt sind und der Kontakt zwischen Kompositmaterial und dem für die Hydrolyse verwendeten Wasser oder dem wasserhaltigen Gemisch durch irreversible Beschädigung oder Zerstörung der Barriere hergestellt wird, wobei der Kontakt bevorzugt
a) durch Bruch eines zerstörbaren Kompartimentes, beispielsweise einer Glasampulle, in dem das Kompositmaterial und/oder das für die Hydrolyse verwendete Wasser oder das wasserhaltige Gemisch bevorratet sind,
b) durch Zerstörung, beispielsweise durch Durchstechen, einer Membran, die das Kompositmaterial und/oder das für die Hydrolyse verwendete Wasser oder das wasserhaltige Gemisch voneinander separiert,
erfolgt.

14. Vorrichtung nach einem der Ansprüchen 11 bis 13, **dadurch gekennzeichnet, dass** das darin enthaltene Kompositmaterial in einem separaten gasdichten Behälter,
bevorzugt in einem elastischen und/oder plastisch verformbaren Behälter, beispielsweise einer Blase aus einem Butyl-, Epichlorohydrin-, Ethylen-Propylen-, Fluoro-, Chloropren-, Chlor-Sulfat-Polyethylen-, Naturgummi-, Nitril-, Perfluoro-, Polyurethan- und/oder Silikonelastomer, einer Tube oder einem Schlauchbeutel, vorgehalten oder bereitgestellt wird,
oder das Kompositmaterial durch eine Förderschnecke in den gasdichten Reaktionsraum dosiert wird und/oder dorthin transportiert wird.

15. Vorrichtung nach einem der Ansprüche 11 bis 14, **dadurch gekennzeichnet, dass** das wasserhaltige Gemisch Wasser sowie mindestens einen Stoff zur Gefrierpunktserniedrigung, beispielsweise Ethylenglykol, Ethanol, Glycerin, Magnesiumchlorid, Calciumchlorid, Kaliumchlorid oder Natriumchlorid, enthält.

16. Vorrichtung nach einem der Ansprüche 11 bis 15, **dadurch gekennzeichnet, dass** das Kompositmaterial darin *in situ* hergestellt und/oder zubereitet und/oder erzeugt wird, beispielsweise durch eine darin enthaltene Einheit, welche die zur Herstellung des Kompositmaterials benötigten Ausgangssubstanzen miteinander vermischt und/oder verdichtet.

17. Verfahren zur Erzeugung von Wasserstoff, bei dem in ein Kompositmaterial nach einem der Ansprüche 1 bis 10 und/oder in einer Vorrichtung nach einem der Ansprüche 11 bis 16 mit Wasser oder wasserhaltigen Gemischen kontaktiert und unter Bildung von Wasserstoff hydrolysiert wird.

18. Verfahren nach vorhergehendem Anspruch, **dadurch gekennzeichnet, dass** zur Bestimmung und/oder Steuerung der Hydrolysereaktion eine oder mehrere der folgenden Größen zeitabhängig und/oder zeitunabhängig überwacht und/oder geregelt und/oder gesteuert werden: Druck, Temperatur, Füllstand, Wasserstoffvolumen, pH, elektrische Leitfähigkeit, Rührgeschwindigkeit, zugegebene bzw. zuzugebende Menge des Kompositmaterials und/oder zugegebene bzw. zuzugebende Menge des Wassers bzw. des wasserhaltigen Gemischs.

19. Vorrichtung zur Erzeugung elektrischer Energie, umfassend eine Vorrichtung zur Erzeugung von Wasserstoff nach einem der Ansprüche 11 bis 16 sowie mindestens einen Apparat zur Erzeugung elektrischer Energie aus Wasserstoff, insbesondere mindestens eine Brennstoffzelle oder eine Verbrennungskraftmaschine mit Generator.

20. Verwendung eines Kompositmaterials nach einem der Ansprüche 1 bis 10, einer Vorrichtung zur Erzeugung von Wasserstoff nach einem der Ansprüche 11 bis 16, eines Verfahrens zur Erzeugung von Wasserstoff nach einem der Ansprüche 17 bis 18 und/oder einer Vorrichtung zur Erzeugung elektrischer Energie nach Anspruch 19 zur Versorgung von Backup- oder Notstromversorgungen, tragbaren elektronischen Geräten, Ladegeräten, Beleuchtung, maritimen Anwendungen, insbesondere Bojen und Signalzeichen, Sensoren und Sonden, autarken Funkstationen, Feldbatterien, Auftriebsgeneratoren und/oder Demonstratoren z.B. für Schulen oder Messen mit elektrischer Energie und/oder Wasserstoff.

## Claims

1. Composite material for the hydrolytic production of hydrogen, comprising or consisting of
a) at least one alkaline earth metal-containing metal hydride, selected from the group consisting of MgH₂, CaH₂, Mg₂NiH₄, Mg₂FeH₆, Mg₂CoH₅, Mg₂(Fe_{1-*x*}Co*ₓ*)H*_{y}* with 0 ≤ x ≤ 1; 5 ≤ y ≤ 6, Mg*ₓRE*_{*(*1-*x)*}H*_{y}* with 0 < x ≤ 1; 0 < y ≤ 3, Mg*ₓTM*_{*(*1-*x)*}H*_{y}* with 0 < x ≤ 1; 0 < y ≤ 3 and also mixtures and/or combinations hereof, *RE* representing the lanthanides La to Lu of the periodic table and *TM* the transition metals of the periodic table.
b) at least one additive, selected from the group consisting of water-soluble and/or under influence of water decomposable metal salts with at least bivalent metal cations, and also
c) at least one aprotic, organic substance with at least one carboxylic acid ester group, which is not or only partially miscible with water and has an upper solubility limit of less than 25% by weight (corresponding to 250 g ester/kg water) at 25°C.

2. Composite material according to claim 1, **characterised in that** the at least one aprotic organic substance with at least one carboxylic acid ester group has at normal pressure
a) a melting point of less than 100°C, preferably of 25 to 95°C or of less than -20°C and/or
b) a boiling point of more than 100°C, preferably of more than 150°C and/or
c) a vapour pressure of less than 1 hPa at 20°C, preferably of less than 10 Pa at 20°C, further preferably of less than 0.4 Pa at 20°C, particularly preferably of less than 10⁻² Pa at 20°C,
preferably comprises exactly one, two, three or four carboxylic acid ester groups,
further preferred has an upper solubility limit in water of less than 9% by weight (corresponding to 90 g ester/kg water),
especially preferred is selected from the group consisting of
a) carboxylic acid esters which are liquid at room temperature, in particular octanedioic acid-1,8-dimethyl ester; pentanedioic acid-1,5-dipropyl ester; heptanedioic acid-1,7-diethyl ester; oxacyclotridecan-2-one; hexanedioic acid-1,6-dipropyl ester; decanedioic acid-1,10-dimethyl ester; butanedioic acid-1,4-dibutyl ester; octanedioic acid-1,8-diethyl ester; nonanedioic acid-1,9-diethyl ester; pentanedioic acid-1,5-dibutyl ester; propanedioic acid-1,5-dipentyl ester; dodecanoic acid methyl ester; undecanoic acid ethyl ester; octanoic acid pentyl ester; hexanoic acid heptyl ester; hexanedioic acid-1,6-dibutyl ester; decanedioic acid-1,10-diethyl ester; hexanedioic acid-1,6-bis(2-methylpropyl) ester; butanedioic acid-1,4-dipentyl ester; dodecanoic acid ethyl ester; acetic acid dodecyl ester; heptanoic acid heptyl ester; octanoic acid hexyl ester; hexanoic acid octyl ester; 2,2,4,4-pentanetetracarboxylic acid-1,2,4,5-tetraethyl ester; 1,4-dioxacycloheptadecane-5,17-dione; butanoic acid-1,2,3-propanetriyl ester; tributyric acid glycerol ester; octanoic acid heptyl ester; heptanoic acid octyl ester; hexanoic acid nonyl ester; tetradecanoic acid ethyl ester; octanoic acid octyl ester; tetradecanoic acid-1-methyl ester; hexanoic acid undecyl ester; 1-hexadecanol-1-acetate; decanoic acid octyl ester; hexadecanoic acid-1-methyl ester; decanoic acid decyl ester; hexanedioic acid-1,6-dioctyl ester; hexanedioic acid-1-decyl-6-octyl ester; hexanedioic acid-1,6-dinonyl ester; nonanedioic acid-1,9-bis(2-ethylhexyl) ester; 1,2,3-propanetriol-1,2,3-triacetate [triacetin]; octanoic acid-1,1',1"-(1,2,3-propanetriyl) ester [glyceroltricaprylate]; decanedioic acid-1,10-bis(2-ethylhexyl) ester [dioctylsebacate]; hexanedioic acid-1,6-bis(2-ethylhexyl) ester; decanedioic acid-1,10-dibutyl ester; decanoic acid-1,1',1"-(1,2,3-propanetriyl) ester [glyceroltricaprinate]; tridecanoic acid methyl ester; tetradecanoic acid butyl ester; hexanoic acid-1,1',1"-(1,2,3-propanetriyl) ester [glyceroltricapronate]; hexadecanoic acid(2-ethylhexyl) ester; hexanedioic acid-1,6-dihexyl ester; nonanedioic acid-1,9-dihexyl ester; hexanedioic acid-1,6-diheptyl ester; nonanoic acid butyl ester; dodecanoic acid hexyl ester; nonanoic acid pentyl ester; nonanoic acid heptyl ester; nonanoic acid-1,9-bis(2-ethylbutyl) ester; hexanedioic acid-1,6-bis(2-ethylbutyl) ester; hexanoic acid tetradecyl ester; hexanoic acid tridecyl ester; cyclohexane dicarboxylic acid diester, preferably with linear or branched aliphatic alkylalcoholate substituents on the ester groups -OR, R including 1 to 20 carbon atoms, in particular 1,2-cyclohexane dicarboxylic acid diisononyl ester (DINCH)
b) carboxylic acid esters which are solid at room temperature, in particular tetradecanoic acid methyl ester; hexadecanoic acid methyl ester; dodecanoic acid ethyl ester; octadecanoic acid methyl ester; eicosanoic acid methyl ester; decanedioic acid-1,10-dimethyl ester; docosanoic acid methyl ester; hexadecanoic acid-1-methylethyl ester; tridecanedioic acid-1,13-dimethyl ester; octadecanoic acid butyl ester; eicosanoic acid ethyl ester; docosanoic acid ethyl ester; hexadecanedioic acid-1,16-dimethyl ester; 1,12-dodecanedioic acid-1,12-diacetate; hexadecanoic acid hexadecyl ester; hexanedioic acid-1,6-dioctyl ester; octadecanedioic acid-1,18-diethyl ester; butanoic acid-1,2,3-propanetriyl ester; 1,1,2,2-ethanetetracarboxylic acid-1,1,2,2-tetraethyl ester; oxacyclotridecan-2-one; hexadecanoic acid-1,1',1"-(1,2,3-propanetriyl) ester [tripalmitin]; tetradecanoic acid-1,1',1"-(1,2,3-propanetriyl) ester [trimyristin]; 2,2-bis(octadecanoyloxymethyl)-1,3-propanediyldioctadecanoate [pentaerythritetetrastearate]; octadecanoic acid octadecyl ester [stearylstearate]; docosanoic acid-1,1',1"-(1,2,3-propanetriyl) ester [tribehenin]; nonadecanoic acid ethyl ester; docosanoic acid docosyl ester [behenylbehenate]; decanoic acid-1,1',1"-(1,2,3-propanetriyl) ester [tricaprin]; 2,2-bis[(acetyloxy)methyl]propane-1,3-diol-1,3-diacetate; octadecanoic acid-1,1',1"-(1,2,3-propanetriyl) ester [glyceroltristearate]; 2-octadecanoyloxyethyloctadecanoate [ethylene glycol distearate]; dodecanoic acid-1,1',1"-(1,2,3-propanetriyl) ester [trilaurin],
c) plasticisers, in particular plasticisers selected from the group of phthalates, such as e.g. diisodecyl phthalate and/or diisononyl phthalate and the phthalate derivates and also
d) mixtures and combinations of at least two of the carboxylic acid esters mentioned under a) to c).

3. Composite material according to one of the preceding claims, **characterised in that** the at least one aprotic organic substance with at least one carboxylic acid ester group has a variable composition, in particular alcoholate substituents of variable composition and/or of different isomerism in one or more carboxylic acid ester groups.

4. Composite material according to one of the preceding claims, **characterised in that** the total quantity of the at least one aprotic organic substance with at least one carboxylic acid ester group in the preparation is between 1 and 80% by weight, preferably between 5 and 70% by weight, further preferably between 10 and 60% by weight, further preferably between 21 and 50% by weight, particularly preferably between 30 and 49% by weight, and/or the total quantity of the at least one additive contained therein, relative to the total quantity of the metal hydride, is ≤ 15% by mol, preferably ≤ 5% by mol, further preferably ≤ 2.5% by mol.

5. Composite material according to one of the preceding claims, **characterised in that** the at least bivalent metal cation of the at least one additive is selected from the IUPAC groups 2, 3, 4, 5, 6, 7, 8, 10, 12, 13, 14 of the periodic table of elements, in particular is selected from the group consisting of Zn²⁺, Ca²⁺, Mg²⁺, Sn²⁺, Ni²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE*³⁺, *RE*⁴⁺*, RE* representing the lanthanides La to Lu of the periodic table.

6. Composite material according to one of the preceding claims, **characterised in that** the at least one additive contained in the composite material forms, poorly soluble hydroxides in aqueous solution above pH = 8 and/or **in that** the hydroxide of the metal cation of the additive has a solubility, in water and/or in the at least one aprotic organic substance with at least one carboxylic acid ester group, of less than 10⁻³ mol/l,
preferably does not react in an alkaline manner with water,
further preferably is present as metal chloride, -fluoride, - bromide, -nitrate, -amide, -sulphate, -hydrogen sulphate, - acetate, -butyrate, -formiate, -lactate, -malonate, -pyruvate, - tartrate or -citrate, and in particular is selected from the group consisting of zirconium-(IV)-chloride, zirconium-(IV)-acetate, zirconium-(IV)-citrate, zirconium-(IV)-formiate, titanium-(III)-chloride, iron-(III)-chloride, iron-(III)-acetate, iron-(III)-citrate, iron-(III)-formiate, iron-(II)-chloride, magnesium chloride,
magnesium acetate, magnesium citrate, magnesium formiate, zinc chloride, zinc acetate, zinc citrate, zinc formiate and also mixtures or combinations hereof.

7. Composite material according to one of the preceding claims, **characterised in that** it
a) does not comprise any substances which comprise or release hydroxide ions and/or water and/or
b) is free of carrier liquids which are chemically inert relative to the metal hydride and without carboxylic acid ester groups, in particular alkanes,
and optionally
• comprises one or more phosphate-, carbonate- or sulphate scavenger, a scavengers for at least bivalent anions and/or a scavenger for chelate formers, such as for example a soluble lithium-, calcium-, magnesium- or iron-(III)-salt, for precipitating disturbing phosphate- or carbonate ions or for specific binding of chelate formers, such as EDTA or crown ethers or a soluble strontium- or barium salt for precipitating disturbing sulphate ions,
• one or more further materials for facilitating production, selected from the group consisting of grinding aids, such as for example stearic acid or isooctane, and/or an aid for compression, such as for example zinc stearate, graphite, magnesium or a wax, and/or a material for improvement of the hydrolysis properties, such as for example at least one water-soluble polymer, in particular a polyvinyl alcohol, starch or cellulose,
• one or more solids which are inert relative to the metal hydride and act as binder and/or disintegrative, such as for example microcrystalline cellulose or polyvinyl pyrrolidone,
• a moisture indicator which for example discolours characteristically with the effect of moisture.

8. Composite material according to one of the preceding claims, **characterised in that** it is embedded, encapsulated or welded-in in a water soluble polymer, in particular for example a polyvinyl alcohol, starch and/or cellulose, or is present coated with or compressed together with such a polymer.

9. Composite material according to one of the preceding claims, which is present
a) in the form of a granulate or powder, a suspension, a paste or in compressed form, such as for example tablets, pressed articles or compressed beds and/or
b) surrounded by an elastic container, for example a balloon made of a butyl-, epichlorohydrin-, ethylene-propylene-, fluoro-, chloroprene-, chlorine-sulphate-polyethylene-, natural rubber-, nitrile-, perfluoro-, polyurethane-, and/or silicone elastomer and/or
c) surrounded by a plastically deformable container, for example a tube or a hose bag.

10. Composite material according to one of the preceding claims, **characterised in that** at least one component, in particular the at least one metal hydride and/or the at least one additive was subjected to mechanical activation, for example by grinding, rolling or reshaping.

11. Device for the hydrolytic production of hydrogen, comprising at least one composite material according to one of the preceding claims.

12. Device according to the preceding claim, **characterised in that** it
• has at least one gas-impermeable reaction chamber, at least one supply for the composite material and/or at least one supply for water or a water-containing mixture and also at least one discharge pipe for the resulting hydrogen,
wherein
stock and also the supply of the composite material and/or the stock and also the supply of the water or water-containing mixture preferably are situated inside the gas-impermeable reaction chamber,
as well as optionally
• one or more injection nozzles for the composite material and/or for water or water-containing mixture, and/or
• one or more pipes for discharging the waste products produced during the hydrolysis reaction out of the gas-impermeable reaction chamber, and/or
• one or more units which induce and/or improve thorough mixing of the reactants in the gas-impermeable reaction chamber, for example an agitator or an ultrasound generator.
• one or more units for reducing the partial pressures of volatile substances and/or of water vapour and/or for retention of aerosols in or after the discharge pipe for the produced hydrogen, for example an absorber based on zeolite or silica gel, a hydrogen-permeable membrane, a fibre-, a membrane- or sintered filter, and/or
• a unit for preventing backflow of water or water vapour from the reaction chamber into the composite material, such as for example a non-return valve or a sluice, and/or
• a heat exchanger, by means of which for example heat can be transferred into the reaction chamber or out of the reaction chamber via a thermofluid, and/or
• a unit for detecting undesired hydrolysis in the composite material, for example a moisture indicator in the composite material and/or a hydrogen sensor in the storage container for the composite material, and/or
• a unit with a capillary effect, by means of which contact between the composite material and the water or the water-containing mixture which is used for the hydrolysis can be produced, for example a wick, a sponge or fibres.

13. Device according to claim 11, **characterised in that** the composite material or the water and the water-containing mixture which is used for the hydrolysis are separated from each other by means of a destructible barrier and contact between composite material and the water or the water-containing mixture which is used for the hydrolysis is produced by irreversible damage or destruction of the barrier, wherein the contact preferably is established by
a) breaking a destructible compartment, for example a glass ampoule, in which the composite material and/or the water used for hydrolysis is stored,
b) by destruction, for example by piercing of a membrane separating the composite material and water or water-containing mixture used for hydrolysis.

14. Device according to one of the claims 11 to 13, **characterised in that** the composite material contained therein is stored in a separate gas-impermeable container, preferably
in an elastic and/or plastically deformable container, for example a balloon made of a butyl-, epichlorohydrin-, ethylene-propylene-, fluoro-, chloroprene-, chlorine-sulphate-polyethylene-, natural rubber-, nitrile-, perfluoro-, polyurethane- and/or silicone elastomer, a tube or a hose bag, or is metered into the gas-impermeable reaction chamber and/or transported therein by a conveying screw.

15. Device according to one of the claims 11 to 14, **characterised in that** the water-containing mixture comprises water and also at least one substance for lowering the freezing point, for example ethylene glycol, ethanol, glycerol, magnesium chloride, calcium chloride, potassium chloride or sodium chloride.

16. Device according to one of the claims 11 to 15, **characterised in that** the composite material is manufactured and/or prepared and/or produced *in situ* therein, for example by a unit contained therein which mixes together and/or compresses the starting substances required for production of the composite material.

17. Method for the production of hydrogen, in which a composite material according to one of the claims 1 to 10 and/or in a device according to one of the claims 11 to 16, is contacted with water or water-containing mixtures and hydrolysed under formation of hydrogen.

18. Method according to of the preceding claim, **characterised in that**, in order to determine and/or control the hydrolysis reaction, one or more of the following variables are monitored and/or regulated and/or controlled as a function of time and/or not as a function of time: pressure, temperature, filling level, hydrogen volume, pH, electrical conductivity, agitation speed, added, or to be added, quantity of composite material and/or added, or to be added, quantity of water or water-containing mixture.

19. Device for the production of electrical energy, comprising a device for the production of hydrogen according to one of the claims 11 to 16 and also at least one apparatus for the production of electrical energy from hydrogen, in particular at least one fuel cell or a combustion engine with generator.

20. Use of a composite material according to one of the claims 1 to 10, a device for the production of hydrogen according to one of the claims 11 to 16, a method for the production of hydrogen according to one of the claims 17 to 18 and/or a device for the production of electrical energy according to claim 19 for supplying back up- or emergency current supplies, portable electronic devices, charging devices, lighting, maritime applications, in particular buoys and signals, sensors and probes, self-sufficient radio stations, field batteries, buoyancy generators and/or demonstrators, e.g. for schools or trade fairs, with electrical energy and/or hydrogen.

## Revendications

1. Matériau composite pour la production hydrolytique d'hydrogène, contenant, ou en étant constitué de,
a) au moins un hydrure métallique contenant un métal alcalino-terreux, choisi dans le groupe consistant en MgH₂, CaH₂, Mg₂NiH₄, Mg₂FeH₆, Mg₂CoH₅, Mg₂(Fe₁₋ₓCOₓ)H_{y} avec 0 ≤ x ≤ 1 ; 5 ≤ y ≤ 6, Mgₓ*RE*(₁₋ₓ)H_{y} avec 0 < x ≤ 1 ; 0 < y ≤ 3, Mgₓ*TM*(₁₋ₓ)H_{y} avec 0 < x ≤ 1 ; 0 < y ≤ 3, ainsi que les mélanges et/ou combinaisons de ceux-ci, *RE* représentant les lanthanides La à Lu du Tableau Périodique et *TM* représentant les métaux de transition du Tableau Périodique,
b) au moins un additif, choisi dans le groupe consistant en les sels métalliques solubles dans l'eau et/ou décomposables sous l'action de l'eau, ayant des cations métalliques au moins divalents, ainsi que
c) au moins une substance organique aprotique ayant au moins un groupe ester d'acide carboxylique, qui n'est pas miscible ou n'est que partiellement miscible à l'eau et présente une limite supérieure de solubilité inférieure à 25 % en poids (ce qui correspond à 250 g d'ester / kg d'eau) à 25 °C.

2. Matériau composite selon la revendication 1, **caractérisé en ce que** l'au moins une substance organique aprotique ayant au moins un groupe ester d'acide carboxylique présente, sous la pression normale,
a) un point de fusion inférieur à 100 °C, de préférence de 25 à 95 °C ou inférieur à -20 °C, et/ou
b) un point d'ébullition supérieur à 100 °C, de préférence supérieur à 150 °C, et/ou
c) une pression de vapeur inférieure à 1 hPa à 20 °C, de préférence inférieure à 10 Pa à 20 °C, plus particulièrement inférieure à 0,4 Pa à 20 °C, d'une manière particulièrement préférée inférieure à 10⁻² Pa à 20 °C,
contient de préférence exactement un, deux, trois ou quatre groupes ester d'acide carboxylique,
d'une manière plus préférée, présente une limite supérieure de solubilité dans l'eau inférieure à 9 % en poids (ce qui correspond à 90 g d'ester / kg d'eau),
d'une manière particulièrement préférée est choisi dans le groupe consistant en
a) les esters d'acides carboxyliques liquides à la température ambiante, en particulier l'ester 1,8-diméthylique de l'acide octanedioïque ; l'ester 1,5-dipropylique de l'acide pentanedioïque ; l'ester 1,7-diéthylique de l'acide heptanedioïque ; l'oxacyclotridécan-2-one ; l'ester 1,6-dipropylique de l'acide hexanedioïque ; l'ester 1,10-diméthylique de l'acide décanedioïque ; l'ester 1,4-dibutylique de l'acide butanedioïque ; l'ester 1,8-diéthylique de l'acide octanedioïque ; l'ester 1,9-diéthylique de l'acide nonanedioïque ; l'ester 1,5-dibutylique de l'acide pentanedioïque ; l'ester 1,5-dipentylique de l'acide propanedioïque ; l'ester méthylique de l'acide dodécanoïque ; l'ester éthylique de l'acide undécanoïque ; l'ester pentylique de l'acide octanoïque ; l'ester heptylique de l'acide hexanoïque ; l'ester 1,6-dibutylique de l'acide hexanedioïque ; l'ester 1,10-diéthylique de l'acide décanedioïque ; l'ester 1,6-bis(2-méthylpropylique) de l'acide hexanedioïque ; l'ester 1,4-dipentylique de l'acide butanedioïque ; l'ester éthylique de l'acide dodécanoïque ; l'ester dodécylique de l'acide acétique ; l'ester heptylique de l'acide heptanoïque ; l'ester hexylique de l'acide octanoïque ; l'ester octylique de l'acide hexanoïque ; l'ester 1,2,4,5-tétraéthylique de l'acide 2,2,4,4-pentanetétracarboxylique ; la 1,4-dioxacycloheptadécane-5,17-dione ; l'ester 1,2,3-propanetriylique de l'acide butanoïque ; l'ester du glycérol et de l'acide tributyrique ; l'ester heptylique de l'acide octanoïque ; l'ester octylique de l'acide heptanoïque ; l'ester nonylique de l'acide hexanoïque ; l'ester éthylique de l'acide tétradécanoïque ; l'ester octylique de l'acide octanoïque ; l'ester 1-méthylique de l'acide tétradécanoïque ; l'ester undécylique de l'acide hexanoïque ; le 1-acétate de 1-hexadécanol ; l'ester octylique de l'acide décanoïque ; l'ester 1-méthylique de l'acide hexadécanoïque ; l'ester décylique de l'acide décanoïque ; l'ester 1,6-dioctylique de l'acide hexanedioïque ; l'ester 1-décyl-6-octylique de l'acide hexanedioïque ; l'ester 1,6-dinonylique de l'acide hexanedioïque ; l'ester 1,9-bis(2-éthylhexylique) de l'acide nonanedioïque ; le 1,2,3-triacétate de 1,2,3-propanetriol [triacétine] ; l'ester 1,1',1"-(1,2,3-propanetriylique) de l'acide octanoïque [tricaprylate de glycérol] ; l'ester 1,10-bis(2-éthylhexylique) de l'acide décanedioïque [sébaçate de dioctyle] ; l'ester 1,6-bis(2-éthylhexylique) de l'acide hexanedioïque ; l'ester 1,10-dibutylique de l'acide décanedioïque ; l'ester 1,1',1"-(1,2,3-propanetriylique) de l'acide décanoïque [tricaprinate de glycérol] ; l'ester méthylique de l'acide tridécanoïque ; l'ester butylique de l'acide tétradécanoïque ; l'ester 1,1',1"-(1,2,3-propanetriylique) de l'acide hexanoïque [tricapronate de glycérol] ; l'ester (2-éthylhexylique) de l'acide hexadécanoïque ; l'ester 1,6-dihexylique de l'acide hexanedioïque ; l'ester 1,9-dihexylique de l'acide nonanedioïque ; l'ester 1,6-diheptylique de l'acide hexanedioïque ; l'ester butylique de l'acide nonanoïque ; l'ester hexylique de l'acide dodécanoïque ; l'ester pentylique de l'acide nonanoïque ; l'ester heptylique de l'acide nonanoïque ; l'ester 1,9-bis(2-éthylbutylique de l'acide nonanoïque ; l'ester 1,6-bis(2-éthylbutylique) de l'acide hexanedioïque ; l'ester tétradécylique de l'acide hexanoïque ; l'ester tridécylique de l'acide hexanoïque ; les diesters de l'acide cyclohexanedicarboxylique, ayant de préférence des résidus alcoolate d'alkyle aliphatiques à chaîne droite ou ramifiée sur les groupes ester-OR, R ayant 1 à 20 atomes de carbone, en particulier l'ester diisononylique de l'acide 1,2-cyclohexanedicarboxylique (DINCH),
b) les esters d'acides carboxyliques solides à la température ambiante, en particulier l'ester méthylique de l'acide tétradécanoïque ; l'ester méthylique de l'acide hexadécanoïque ; l'ester éthylique de l'acide dodécanoïque ; l'ester méthylique de l'acide octadécanoïque ; l'ester méthylique de l'acide éicosanoïque ; l'ester 1,10-diméthylique de l'acide décanedioïque ; l'ester méthylique de l'acide docosanoïque ; l'ester 1-méthyléthylique de l'acide hexadécanoïque ; l'ester 1,13-diméthylique de l'acide tridécanedioïque ; l'ester butylique de l'acide octadécanoïque ; l'ester éthylique de l'acide éicosanoïque ; l'ester éthylique de l'acide docosanoïque ; l'ester 1,16-diméthylique de l'acide hexadécanedioïque ; le 1,12-diacétate de l'acide 1,12-dodécanedioïque ; l'ester hexadécylique de l'acide hexadécanoïque ; l'ester 1,6-dioctylique de l'acide hexanedioïque ; l'ester 1,18-diéthylique de l'acide octadécanedioïque ; l'ester 1,2,3-propanetriylique de l'acide butanoïque ; l'ester 1,1,2,2-tétraéthylique de l'acide 1,1,2,2-éthanetétracarboxylique ; l'oxacyclotridécan-2-one ; l'ester 1,1',1"-(1,2,3-propanetriylique) de l'acide hexadécanoïque [tripalmitine] ; l'ester 1,1'1"-(1,2,3-propanetriylique) de l'acide tétradécanoïque [trimyristine] : le dioctadécanoate de 2,2-bis(octadécanoyloxyméthyl)-1,3-propanediyle [tétrastéarate de pentaérythritol] ; l'ester octadécylique de l'acide octadécanoïque [stéarate de stéaryle] ; l'ester 1,1',1"-(1,2,3-propanetriylique) de l'acide docosanoïque [tribéhénine] ; l'ester éthylique de l'acide nonadécanoïque ; l'ester docosylique de l'acide docosanoïque [béhénate de béhényle] ; l'ester 1,1',1"-(1,2,3-propanetriylique) de l'acide décanoïque [tricaprine] ; le 1,3-diacétate de 2,2-bis[(acétyloxy)méthyl]-propane-1,3-diol ; l'ester 1,1',1"-(1,2,3-propanetriylique) de l'acide octadécanoïque [tristéarate de glycérol] ; l'octadécanoate de 2-octadécanoyloxyéthyle [distéarate d'éthylèneglycol] ; l'ester 1,1',1"-(1,2,3-propanetriylique) de l'acide dodécanoïque [trilaurine)],
c) les plastifiants, en particulier les plastifiants choisis dans le groupe des phtalates, tels que par exemple le phtalate de diisodécyle et/ou le phtalate de diisononyle et les dérivés des phtalates, ainsi que
d) les mélanges et combinaisons d'au moins deux des esters d'acides carboxyliques mentionnés en a) à c).

3. Matériau composite selon l'une des revendications précédentes, **caractérisé en ce que** l'au moins une substance organique aprotique ayant au moins un groupe ester d'acide carboxylique présente une composition variable, en particulier des résidus alcoolate de composition variable et/ou une isomérie différente sur un ou plusieurs groupes esters d'acide carboxylique.

4. Matériau composite selon l'une des revendications précédentes, **caractérisé en ce que** la quantité totale de l'au moins une substance organique aprotique ayant au moins un groupe ester d'acide carboxylique dans la préparation est comprise entre 1 et 80 % en poids, de préférence entre 5 et 70 % en poids, plus préférentiellement entre 10 et 60 % en poids, plus préférentiellement entre 21 et 50 % en poids, d'une manière particulièrement préférée entre 30 et 49 % en poids, et/ou que la quantité totale de l'au moins un additif qui y est contenu est, par rapport à la quantité totale de l'hydrure métallique, ≤ 15 % en moles, de préférence ≤ 5 % en moles, plus préférentiellement ≤ 2,5 % en moles.

5. Matériau composite selon l'une des revendications précédentes, **caractérisé en ce que** le cation métallique au moins divalent de l'au moins un additif est choisi dans le groupe consistant en les groupes IUPAC 2, 3, 4, 5, 6, 7, 8, 10, 12, 13, 14 du Tableau Périodique des Eléments, et est en particulier choisi dans le groupe consistant en Zn²⁺, Ca²⁺, Mg²⁺, Sn²⁺, Ni²⁺, Fe²⁺, Fe³⁺, Ti³⁺, Ga³⁺, Sc³⁺, Al³⁺, Y³⁺, Ti⁴⁺, Zr⁴⁺, Sn⁴⁺, *RE³⁺, RE*⁴⁺*, RE* représentant les lanthanides La à Lu du Tableau Périodique.

6. Matériau composite selon l'une des revendications précédentes, **caractérisé en ce que** l'au moins un additif contenu dans le matériau composite forme, en solution aqueuse au-delà de pH 8, des hydroxydes difficilement solubles, et/ou que l'hydroxyde du cation métallique de l'additif présente une solubilité dans l'eau et/ou dans l'au moins une substance organique aprotique ayant au moins un groupe ester d'acide carboxylique, respectivement inférieure à 10⁻³ mol/l,
de préférence ne réagit pas avec l'eau selon une réaction alcaline,
se présente plus préférentiellement sous forme d'un chlorure, d'un fluorure, d'un bromure, d'un nitrate, d'un amide, d'un sulfate, d'un hydrogénosulfate, d'un acétate, d'un butyrate, d'un formiate, d'un lactate, d'un malonate, d'un pyruvate, d'un tartrate ou d'un citrate métallique, et est choisi en particulier dans le groupe consistant en le chlorure de zirconium(IV), l'acétate de zirconium(IV), le citrate de zirconium(IV), le formiate de zirconium(IV), le chlorure de titane(III), le chlorure de fer(III), l'acétate de fer(III), le citrate de fer(III), le formiate de fer(III), le chlorure de fer(II), le chlorure de magnésium, l'acétate de magnésium, le citrate de magnésium, le formiate de magnésium, le chlorure de zinc, l'acétate de zinc, le citrate de zinc, le formiate de zinc, ainsi que les mélanges ou combinaisons de ceux-ci.

7. Matériau composite selon l'une des revendications précédentes, **caractérisé en ce que**
a) il ne contient pas de substances qui contiennent ou libèrent des ions hydroxyde et/ou de l'eau, et/ou
b) il est exempt de liquides supports sans groupes ester d'acide carboxylique, chimiquement inertes vis-à-vis de l'hydrure métallique, en particulier des alcanes, et, éventuellement, contient
• un ou plusieurs réactifs fixateurs de phosphate, de carbonate ou de sulfate, un réactif fixateur d'anions au moins divalents et/ou un réactif fixateur de chélatants, comme par exemple un sel soluble dans l'eau de lithium, de calcium, de magnésium ou de fer(III) pour provoquer la précipitation des ions phosphate ou carbonate gênants ou pour une liaison ciblée de chélatants, tels que l'EDTA ou les éthers couronne, ou un sel soluble de strontium ou de baryum pour provoquer la précipitation des ions sulfate gênants,
• un ou plusieurs matériaux pour faciliter la fabrication, choisis dans le groupe consistant en les auxiliaires de broyage, tels par exemple que l'acide stéarique ou l'isooctane, et/ou un adjuvant pour la compression, comme par exemple le stéarate de zinc, le graphite ou une cire, et/ou un matériau pour améliorer les propriétés d'hydrolyse, comme par exemple au moins un polymère soluble dans l'eau, en particulier un poly(alcool vinylique), l'amidon ou la cellulose,
• un ou plusieurs solides, inertes vis-à-vis de l'hydrure métallique, qui agissent comme des liants et/ou des explosifs, comme par exemple la cellulose microcristalline ou la polyvinylpyrrolidone,
• un indicateur d'humidité, qui présente par exemple un changement de couleur caractéristique sous l'action de l'humidité.

8. Matériau composite selon l'une des revendications précédentes, **caractérisé en ce qu'**il est incorporé, encapsulé ou soudé dans un polymère soluble dans l'eau, en particulier par exemple dans un poly(alcool vinylique), de l'amidon et/ou de la cellulose, ou est revêtu d'un tel polymère ou se présente comprimé avec ce dernier.

9. Matériau composite selon l'une des revendications précédentes, **caractérisé en ce qu'**il se présente
a) sous forme d'un granulé ou d'une poudre, d'une suspension, d'une pâte ou sous forme comprimée, comme par exemple des comprimés, des comprimés frittés ou des masses en vrac comprimées, et/ou
b) enveloppé d'un récipient élastique, par exemple une bulle en un élastomère de butyle, d'épichlorhydrine, d'éthylène-propylène, fluoré, de chloroprène, de chlorosulfate-polyéthylène, de caoutchouc naturel, nitrile, perfluoré, de polyuréthanne et/ou de silicone, et/ou
c) enveloppé d'un récipient pouvant subir une déformation plastique, par exemple un tube ou un sachet tubulaire.

10. Matériau composite selon l'une des revendications précédentes, **caractérisé en ce qu'**au moins un composant, en particulier l'au moins un hydrure métallique et/ou l'au moins un additif a été soumis à une activation mécanique, par exemple par broyage, laminage ou formage.

11. Dispositif pour la production hydrolytique d'hydrogène, comprenant au moins un matériau composite selon l'une des revendications précédentes.

12. Dispositif selon la revendication précédente, **caractérisé en ce qu'**il comprend
• au moins un espace de réaction étanche aux gaz, au moins une amenée pour le matériau composite et/ou au moins une amenée pour de l'eau ou un mélange contenant de l'eau, ainsi qu'une évacuation pour l'hydrogène qui se forme,
le réservoir et l'amenée du matériau composite et/ou le réservoir, ainsi que l'amenée de l'eau ou du mélange contenant de l'eau, se trouvant de préférence à l'intérieur de l'espace de réaction étanche aux gaz, ainsi que, en outre et éventuellement :
• une ou plusieurs buses d'injection pour le matériau composite et/ou pour l'eau ou le mélange contenant de l'eau, et/ou
• une ou plusieurs évacuations, à partir de l'espace de réaction étanche aux gaz, pour les déchets qui se forment lors de la réaction d'hydrolyse, et/ou
• une ou plusieurs unités qui provoquent et/ou améliorent le mélange intime des réactifs dans l'espace de réaction étanche aux gaz, par exemple un agitateur ou un générateur d'ultrasons, et/ou
• une ou plusieurs unités pour la réduction de la pression partielle de substances volatiles et/ou de la vapeur d'eau et/ou pour la rétention d'aérosols dans ou après l'évacuation de l'hydrogène qui se forme, par exemple un adsorbant à base de zéolite ou de gel de silice, une membrane perméable à la vapeur d'eau, un filtre à fibres, à membrane ou fritté et/ou
• une unité pour empêcher le reflux de l'eau ou de la vapeur d'eau de l'espace de réaction dans le matériau composite, par exemple un clapet de non-retour ou un sas, et/ou
• un échangeur de chaleur, grâce auquel, par exemple par l'intermédiaire d'un thermofluide, de la chaleur peut être transportée dans l'espace de réaction ou évacuée de l'espace de réaction, le thermofluide étant de préférence en contact direct avec le matériau composite et/ou en étant un constituant, et/ou
• une unité pour reconnaître une hydrolyse indésirable dans le matériau composite, par exemple un indicateur d'humidité dans le matériau composite et/ou un capteur d'humidité dans le réservoir du matériau composite, et/ou
• une unité à effet de capillarité, à l'aide de laquelle il est possible de réaliser un contact entre le matériau composite et l'eau utilisée pour l'hydrolyse ou le mélange contenant de l'eau, par exemple une mèche, une éponge ou des fibres.

13. Dispositif selon la revendication 11, **caractérisé en ce que** le matériau composite ou l'eau utilisée pour l'hydrolyse et le mélange contenant de l'eau sont séparés l'un de l'autre à l'aide d'une barrière pouvant être détruite, et le contact entre le matériau composite et l'eau utilisée pour l'hydrolyse ou le mélange contenant de l'eau est réalisé par une dégradation ou une destruction irréversible de la barrière, le contact ayant lieu de préférence
a) par rupture d'un compartiment pouvant être détruit, par exemple une ampoule de verre, dans lequel sont stockés le matériau composite et/ou le mélange utilisé pour l'hydrolyse ou le mélange contenant de l'eau,
b) par destruction, par exemple par perforation, d'une membrane séparant l'un de l'autre le matériau composite et/ou l'eau utilisée pour l'hydrolyse ou le mélange contenant de l'eau.

14. Dispositif selon l'une des revendications 11 à 13, **caractérisé en ce que** le matériau composite qui y est contenu est maintenu dans un récipient distinct étanche aux gaz, de préférence dans un récipient élastique et/ou pouvant subir une déformation plastique, par exemple une bulle en un élastomère de butyle, d'épichlorhydrine, d'éthylène-propylène, fluoré, de chloroprène, de chloro-sulfate-polyéthylène, de caoutchouc naturel, nitrile, perfluoré, de polyuréthanne et/ou de silicone, un tube ou un sachet tubulaire, ou y est mis à disposition, ou le matériau composite est dosé dans l'espace de réaction étanche aux gaz et/ou y est transporté en passant par un transporteur à vis.

15. Dispositif selon l'une des revendications 11 à 14, **caractérisé en ce que** le mélange contenant de l'eau contient de l'eau ainsi qu'au moins une substance pour abaisser le point de congélation, par exemple de l'éthylèneglycol, de l'éthanol, du glycérol, du chlorure de magnésium, du chlorure de calcium, du chlorure de potassium ou du chlorure de sodium.

16. Dispositif selon l'une des revendications 11 à 15, **caractérisé en ce que** le matériau composite est fabriqué et/ou préparé et/ou produit in situ, par exemple à l'aide d'une unité qui y est contenue, qui mélange les unes aux autres et/ou comprime les substances de départ nécessaires à la fabrication du matériau composite.

17. Procédé pour la production d'hydrogène, dans lequel on met en contact avec de l'eau ou des mélanges contenant de l'eau un matériau composite selon l'une des revendications 1 à 10 et/ou dans un dispositif selon l'une des revendications 11 à 16, et on l'hydrolyse avec formation d'hydrogène.

18. Procédé selon la revendication précédente, **caractérisé en ce que**, pour définir et/ou commander la réaction d'hydrolyse, on surveille et/ou régule et/ou commande, en fonction du temps et/ou d'une manière indépendante du temps, les grandeurs suivantes : pression, température, niveau, volume d'hydrogène, pH, conductivité électrique, vitesse d'agitation, quantité ajoutée ou devant être ajoutée du matériau composite et/ou quantité ajoutée ou devant être ajoutée de l'eau ou du mélange contenant de l'eau.

19. Procédé pour la production d'énergie électrique, comprenant un dispositif pour la production d'hydrogène selon l'une des revendications 11 à 16, ainsi qu'au moins un appareil pour la production d'énergie électrique à partir d'hydrogène, en particulier au moins une pile à combustible ou une machine à combustion interne avec générateur.

20. Utilisation d'un matériau composite selon l'une des revendications 1 à 10, d'un dispositif pour la production d'hydrogène selon l'une des revendications 11 à 16, d'un procédé pour la production d'hydrogène selon l'une des revendications 17 à 18 et/ou d'un dispositif pour la production d'énergie électrique selon la revendication 19 pour alimenter en énergie électrique et/ou en hydrogène des alimentations de secours ou d'urgence, des appareils électroniques portatifs, des appareils de charge, un éclairage, des applications maritimes, en particulier des balises et des signaux de signalisation, des capteurs et des sondes, des stations radio autonomes, des batteries de campagne, des générateurs de portance et/ou des démonstrateurs, par exemple pour écoles ou foires.
